# EUROPEAN PATENT SPECIFICATION

(11) **EP 4 249 162 B1**
(45) Date of publication and mention of the grant of the patent: **28.05.2025**
(21) Application number: 21894572.3
(22) Date of filing: 12.11.2021
(51) Int. Cl.: B23K 26/38, G05B 19/4093, B23K 101/18

(54) **LASER PROCESSING METHOD, LASER PROCESSING MACHINE, AND PROCESSING PROGRAM CREATION DEVICE**
LASERBEARBEITUNGSVERFAHREN, LASERBEARBEITUNGSMASCHINE UND VORRICHTUNG ZUR ERZEUGUNG EINES BEARBEITUNGSPROGRAMMS
PROCÉDÉ DE TRAITEMENT AU LASER, MACHINE DE TRAITEMENT AU LASER, ET DISPOSITIF DE CRÉATION DE PROGRAMME DE TRAITEMENT

(30) Priority: 19.11.2020 JP 2020192581
(43) Date of publication of application: 27.09.2023
(73) Proprietor: Amada Co., Ltd., Isehara-shi, Kanagawa 259-1196 (JP)
(72) Inventor: NAKAMURA, Eri, Isehara-shi, Kanagawa 259-1196 (JP); HARAGUCHI, Taisuke, Isehara-shi, Kanagawa 259-1196 (JP)
(74) Representative: Grünecker Patent- und Rechtsanwälte PartG mbB
(86) International application number: PCT/JP2021/041749
(87) International publication number: WO 2022/107698

(56) References cited:
- WO-A1-2019/188694
- WO-A1-2020/074156
- DE-A1- 102019 203 946
- JP-A- 2015 100 828
- JP-A- 2016 078 063
- JP-A- 2016 078 063
- JP-A- H10 244 394
- US-A1- 2013 200 051
- US-A1- 2013 200 051

## Description

### Technical Field

The present disclosure relates to a laser processing method, a laser processing machine, and a processing program creation device.

### Background Art

A laser processing machine irradiates, with a laser beam, a sheet metal mounted on a table, on which a plurality of skids are arranged, to cut the sheet metal, thereby producing a part having a predetermined shape. In the case of producing a part with a hole formed inside, the laser processing machine cuts around a hole formation area where the hole is to be formed, and then cuts around the part. A portion to be cut and removed from the part is referred to as a scrap.

There are a plurality of shapes of holes formed in the sheet metal and such holes are referred to as elongated holes, rectangular holes, round holes, and square holes. When the hole is large, a scrap may not fall downward between the skids, or a scrap that does not fall may rise and interfere with a processing head. Therefore, in order to prevent a scrap from rising and cause the scrap to fall, the laser processing machine divides the hole formation area into a plurality of small scraps at the time of forming a hole of a certain size or more (cf. Patent Literature 1 or 2).

### Citation List

### Patent Literature

Patent Literature 1: Japanese Patent Application Laid-Open Publication No. 2015-100828
Patent Literature 2: Japanese Patent Application Laid-Open Publication No. 2016-78063
Patent Literature 3: DE 10 2019 203 946 A1 discloses a laser cutting process and associated laser processing machine and computer program product.
Patent Literature 4: US 2013/0200051A1 relates to workpiece laser cutting and discloses a sheet metal workpiece processing machine and associated method.
Patent Literature 1-4 disclose all features in the preamble of claim 2.

### Summary

The laser processing machine produces a part with a hole formed inside based on a processing program created in advance. Typically, a processing program creation device creates a processing program for automatically laying out cutting paths, along which a hole formation area is cut so as to be divided into a plurality of scraps, in the hole formation area in accordance with the shape and size of a hole to be formed. When the laser processing machine forms a hole in a sheet metal using the conventional processing program, a large number of dividing marks, which are joints of divided cutting paths, may be formed on the cut surface. As described above, the background art has room for improvement from the viewpoint of the processing quality of the cut surface.

There is a need for a laser processing method, a laser processing machine, and a processing program creation device that can form a hole with good processing quality and as few dividing marks as possible on the cut surface.

According to the laser processing method, the laser processing machine, and the processing program creation device such as defined in claims 1-3, it is possible to form a hole with good processing quality and as few dividing marks as possible on the cut surface.

### Brief Description of Drawings

[Figure 1] Figure 1 is a view illustrating an overall configuration example of a laser processing machine.
[Figure 2] Figure 2 is a plan view illustrating an elongated hole with a width of 40 mm or less formed in a part.
[Figure 3A] Figure 3A is a view illustrating an example of a cutting step at the time of forming the elongated hole illustrated in Figure 2 in a sheet metal.
[Figure 3B] Figure 3B is a view illustrating an example of a cutting step subsequent to Figure 3A.
[Figure 3C] Figure 3C is a view illustrating an example of a cutting step subsequent to Figure 3B.
[Figure 4] Figure 4 is a plan view illustrating an elongated hole with a width of more than 40 mm formed in a part.
[Figure 5A] Figure 5A is a view illustrating an example of a cutting step at the time of forming the elongated hole illustrated in Figure 4 in the sheet metal.
[Figure 5B] Figure 5B is a view illustrating an example of a cutting step subsequent to Figure 5A.
[Figure 5C] Figure 5C is a view illustrating an example of a cutting step subsequent to Figure 5B.
[Figure 5D] Figure 5D is a view illustrating an example of a cutting step subsequent to Figure 5C.
[Figure 5E] Figure 5E is a view illustrating an example of a cutting step subsequent to Figure 5D.
[Figure 5F] Figure 5F is a view illustrating an example of a cutting step subsequent to Figure 5E.
[Figure 6] Figure 6 is a plan view illustrating a rectangular hole with a width of 40 mm or less formed in a part.
[Figure 7A] Figure 7A is a view illustrating an example of a cutting step at the time of forming the rectangular hole illustrated in Figure 6 in the sheet metal.
[Figure 7B] Figure 7B is a view illustrating an example of a cutting step subsequent to Figure 7A.
[Figure 8] Figure 8 is a plan view illustrating a rectangular hole with a width of more than 40 mm formed in a part.
[Figure 9A] Figure 9A is a view illustrating an example of a cutting step at the time of forming the rectangular hole illustrated in Figure 8 in the sheet metal.
[Figure 9B] Figure 9B is a view illustrating an example of a cutting step subsequent to Figure 9A.
[Figure 9C] Figure 9C is a view illustrating an example of a cutting step subsequent to Figure 9B.
[Figure 10] Figure 10 is a plan view illustrating a round hole formed in a part.
[Figure 11A] Figure 11A is a view illustrating an example of a cutting step at the time of forming a round hole with a diameter of less than 80 mm in the sheet metal.
[Figure 11B] Figure 11B is a view illustrating an example of a cutting step subsequent to Figure 11A.
[Figure 11C] Figure 11C is a view illustrating an example of a cutting step subsequent to Figure 11B.
[Figure 12A] Figure 12A is a view illustrating a first modification of the cutting step illustrated in (c) of Figure 11A.
[Figure 12B] Figure 12B is a view illustrating a second modification of the cutting step illustrated in (c) of Figure 11A.
[Figure 12C] Figure 12C is a view illustrating a third modification of the cutting step illustrated in (c) of Figure 11A.
[Figure 13A] Figure 13A is a view illustrating an example of a cutting step at the time of forming a round hole with a diameter of 80 mm or more and less than 100 mm in the sheet metal.
[Figure 13B] Figure 13B is a view illustrating an example of a cutting step subsequent to Figure 13A.
[Figure 13C] Figure 13C is a view illustrating an example of a cutting step subsequent to Figure 13B.
[Figure 14A] Figure 14A is a view illustrating an example of a cutting step at the time of forming a round hole with a diameter of 100 mm or more in the sheet metal.
[Figure 14B] Figure 14B is a view illustrating an example of a cutting step subsequent to Figure 14A.
[Figure 14C] Figure 14C is a view illustrating an example of a cutting step subsequent to Figure 14B.
[Figure 15A] Figure 15A is a view illustrating a first modification of the cutting step illustrated in (c) of Figure 14A.
[Figure 15B] Figure 15B is a view illustrating a second modification of the cutting step illustrated in (c) of Figure 14A.
[Figure 16] Figure 16 is a view illustrating a modification of the cutting step at the time of forming the round hole with a diameter of 100 mm or more in the sheet metal.
[Figure 17] Figure 17 is a plan view illustrating a square hole formed in a part.
[Figure 18] Figure 18 is a view illustrating an example of a cutting step at the time of forming a square hole with a side of 40 mm or less in the sheet metal.
[Figure 19] Figure 19 is a view illustrating an example of a cutting step at the time of forming a square hole with a side of more than 40 mm and not more than 80 mm in the sheet metal.
[Figure 20A] Figure 20A is a view illustrating an example of a cutting step at the time of forming a square hole with a side of more than 80 mm in the sheet metal.
[Figure 20B] Figure 20B is a view illustrating an example of a cutting step subsequent to Figure 20A.
[Figure 20C] Figure 20C is a view illustrating an example of a cutting step subsequent to Figure 20B.
[Figure 20D] Figure 20D is a view illustrating an example of a cutting step subsequent to Figure 20C.
[Figure 20E] Figure 20E is a view illustrating an example of a cutting step subsequent to Figure 20D.
[Figure 20F] Figure 20F is a view illustrating an example of a cutting step subsequent to Figure 20E.
[Figure 20G] Figure 20G is a view illustrating a cutting step subsequent to Figure 20F.
[Figure 21] Figure 21 is a block diagram illustrating a functional configuration example of a computer-aided manufacturing (CAM) device for creating a processing program.

### Description of Embodiment

An example of a laser processing method, a laser processing machine, and a processing program creation device will be described below with reference to the accompanying drawings.

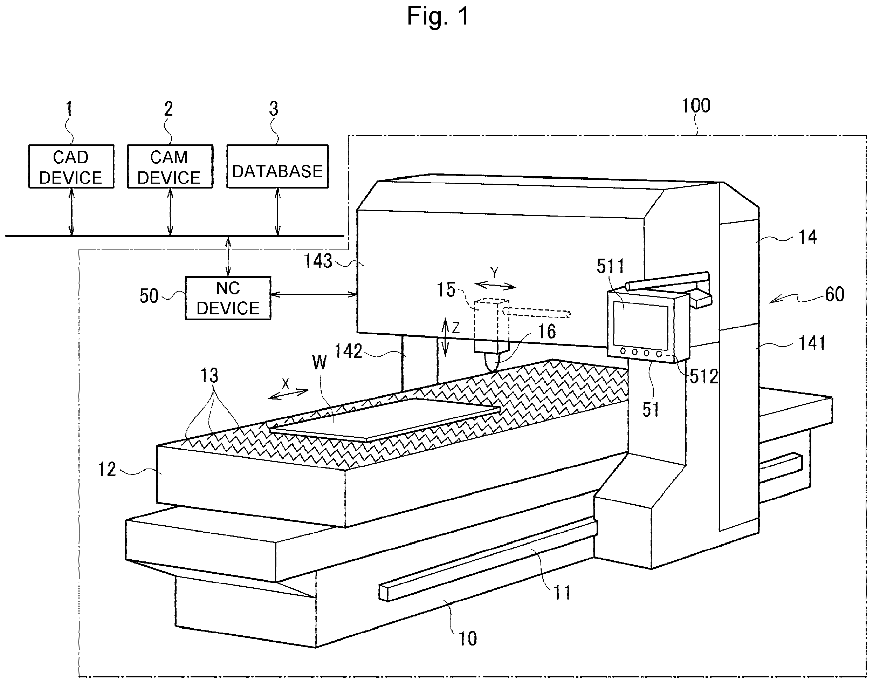

First, an overall configuration example of a laser processing machine 100 will be described with reference to Figure 1. In Figure 1, a table 12 for mounting a sheet metal W, which is a material to be processed, is provided on a base 10. Inside the table 12, a plurality of skids 13 made of, for example, iron plates are arranged in the X direction. A plurality of triangular projections are formed at the upper end of the skid 13. Thus, the sheet metal W is supported by the plurality of projections.

A laser processing machine 100 is provided with a gate-type frame 14 arranged to straddle a table 12. The frame 14 includes side frames 141, 142 and an upper frame 143. The frame 14 is configured to move in the X direction along a rail 11 in the X direction formed on the side surface of the base 10.

A carriage 15 movable in the Y direction is provided in the upper frame 143. A processing head 16 for emitting a laser beam is attached to the carriage 15. The processing head 16 is configured to arbitrarily move in the X and Y directions above the sheet metal W by the frame 14 moving in the X direction and the carriage 15 moving in the Y direction. The processing head 16 is also movable in the Z direction. The processing head 16 is provided with a tracking sensor. When the processing head 16 moves along the surface of the sheet metal W during the processing of the sheet metal W, the processing head 16 is controlled by the tracking sensor so as to maintain a predetermined distance from the sheet metal W.

The base 10, the table 12 on which the skids 13 are arranged, the frame 14, and the carriage 15 to which the processing head 16 is attached constitute a processing machine body 60. A NC (numerical control) device 50 controls the processing machine body 60. The NC device 50 is an example of a control device for controlling the processing machine body 60.

An operating pendant 51 connected to the NC device 50 is attached to the frame 14. The operating pendant 51 includes a display unit 511 and an operation unit 512. The display unit 511 displays various kinds of information. The operating pendant 51 supplies various instruction signals to the NC device 50 by an operator's operation of the operation unit 512. The operating pendant 51 does not have to be attached to the frame 14 and may be installed separately.

A computer-aided design (CAD) device 1, a computer-aided manufacturing (CAM) device 2, and a database 3 are connected to the NC device 50 via a network. These components may not be connected to each other via the network and may exchange data with each other via a storage medium. Each of the CAD device 1 and the CAM device 2 is formed of a computer device. The CAD device 1 and the CAM device 2 may be formed of separate computer devices or may be formed of a single computer device. The CAD device 1 generates graphic data of a part that is produced by the laser processing machine 100. The CAM device 2 creates a processing program for the laser processing machine 100 to cut the sheet metal W and produce the part based on the graphic data of the part (and the graphic data of the sheet metal). The CAM device 2 functions as a processing program creation device

The processing program may be supplied to the NC device 50 or may be supplied to and stored in the database 3. When the processing program is stored in the database 3, the NC device 50 reads out the processing program corresponding to the part to be produced from the database 3. The NC device 50 controls the processing machine body 60 based on the processing program.

The laser processing machine 100 (processing machine body 60) irradiates the sheet metal W with a laser beam while moving the processing head 16 in the X direction or the Y direction to cut the sheet metal W, thereby cutting out one or more parts from the sheet metal W. Note that assist gas is blown on the sheet metal W in accordance with the irradiation with the laser beam. The configuration for blowing the assist gas is not illustrated in Figure 1.

Hereinafter, a description will be given of how the laser processing machine 100 preferably cuts the sheet metal W to form a hole taking elongated holes, rectangular holes, round holes (according to the invention) and square holes as examples of the hole to be formed in a part.

### <Elongated hole (width of 40 mm or less)>

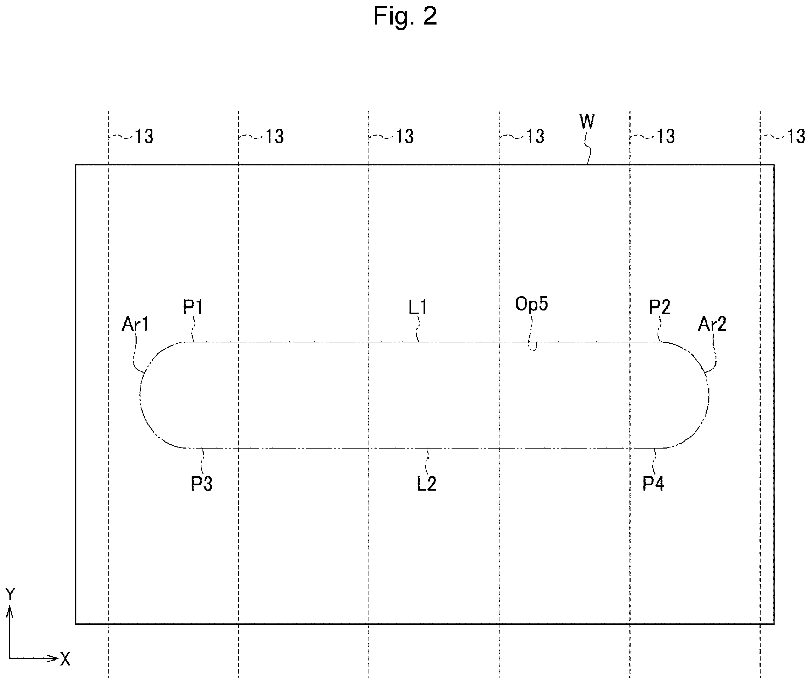

Figure 2 illustrates an elongated hole with a relatively narrow width formed in a part. When the laser processing machine 100 cuts the sheet metal W at a position indicated by a dashed double-dotted line, an elongated hole with an opening Op5 is formed. Note that the outline of the part is not illustrated in Figure 2. The elongated hole is a figure in which a circular arc Ar1 having a semicircular shape is connected between points P1, P3 that are one ends of the straight lines L1, L2, and a circular arc Ar2 having a semicircular shape is connected between points P2, P4 that are the other ends.

The point P1 is a first point, the point P2 is a second point, the point P3 is a third point, and the point P4 is a fourth point. The straight line L1 is a first straight line, and the straight line L2 is a second straight line. The straight line L1 connects points P1, P2, and the straight line L2 connects points P3, P4. A pair of straight lines L1, L2 facing each other are straight lines in the X direction that is a first direction. The Y direction is a second direction orthogonal to the X direction. The straight lines L1, L2 are parallel and have the same length. The straight lines L1, L2 are orthogonal to the skid 13.

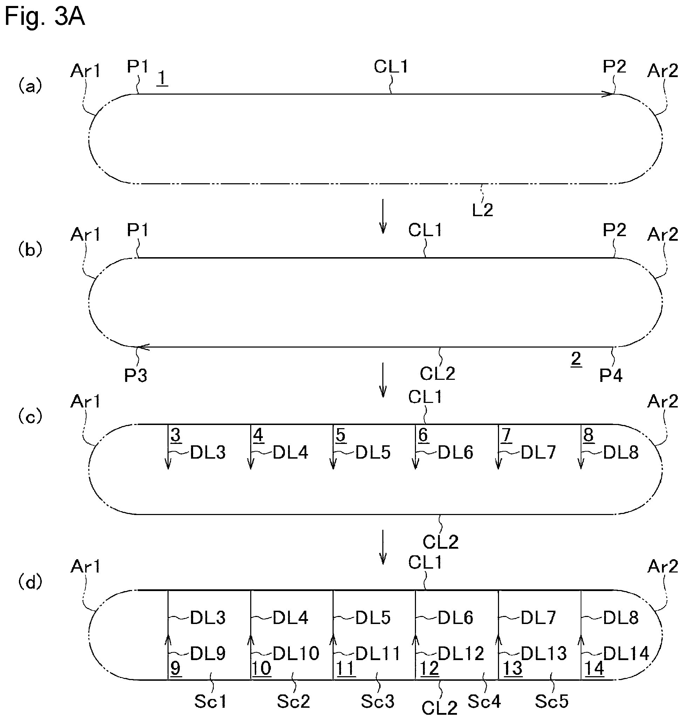

When the width of the elongated hole is 40 mm or less as an example, the CAM device 2 creates a processing program for cutting the sheet metal W in cutting steps illustrated in Figures 3A to 3C. The laser processing machine 100 cuts the sheet metal W in the cutting steps illustrated in Figures 3A to 3C based on the processing program. In Figures 3A to 3C and the following figures, an underlined number indicates a cutting step and its order.

As illustrated in (a) of Figure 3A, as a cutting step 1, the laser processing machine 100 performs irradiation with a laser beam along a cutting path set on the straight line L1 from the point P1 to the point P2 to form a cutting line CL1 on the sheet metal **W.** The cutting path set on the straight line L1 is a first cutting path, and the cutting line CL1 is a first cutting line.

As illustrated in (b) of Figure 3A, as a cutting step 2, the laser processing machine 100 performs irradiation with a laser beam along a cutting path set on the straight line L2 from the point P4 to the point P3 to form a cutting line CL2 on the sheet metal **W.** The cutting path set on the straight line L2 is a second cutting path, and the cutting line CL2 is a second cutting line. The cutting step 1 and the cutting step 2 may be reversed. The cutting directions at the time of forming the cutting lines CL1, CL2 may be reversed.

As illustrated in (a) and (b) of Figure 3A, the laser processing machine 100 continuously cuts each of the straight lines L1, L2 of the elongated hole along one cutting path without breaking up the cutting in the middle.

As illustrated in (c) of Figure 3A, as cutting steps 3 to 8, the laser processing machine 100 performs irradiation with a laser beam along each of cutting paths set so as to be cut in a direction orthogonal to the cutting line CL1 to the center in the width direction of the elongated hole, with the cutting line CL1 as the cutting start points, thereby forming cutting dividing lines DL3 to DL8 on the sheet metal **W.** The plurality of cutting paths in the direction orthogonal to the cutting line CL1 are third cutting paths, and the dividing lines DL3 to DL8 are first dividing lines. While being connected to the cutting line CL1, the dividing lines DL3 to DL8 do not reach the cutting line CL2 and are not connected to the cutting line CL2.

The dividing lines DL3 to DL8 (third cutting paths) are dividing lines (cutting paths) for cutting the cutting line CL1 side of the area between the cutting line CL1 (first cutting path) and the cutting line CL2 (second cutting path) .

Here, the number of dividing lines in the direction orthogonal to the cutting line CL1 is six, but the number of dividing lines is set in accordance with the length of the elongated hole. The cutting end points of the dividing lines DL3 to DL8 are preferably located at the center in the width direction of the elongated hole, but is not limited to the center, and only have to be located at the intermediate positions between the cutting line CL1 and the cutting line CL2.

As illustrated in (d) of Figure 3A, as cutting steps 9 to 14, the laser processing machine 100 performs irradiation with a laser beam along each of cutting paths set to be cut in a direction orthogonal to the cutting line CL2 to the center in the width direction of the elongated hole, with the cutting line CL2 as the cutting start points, thereby forming cutting dividing lines DL9 to DL14 on the sheet metal W. The plurality of cutting paths in the direction orthogonal to the cutting line CL2 are fourth cutting paths, and the dividing lines DL9 to DL14 are second dividing lines. The dividing lines DL9 to DL14 (fourth cutting paths) are dividing lines (cutting paths) for cutting the cutting line CL2 side of the area between the cutting line CL1 and the cutting line CL2.

At this time, the dividing lines DL3 to DL8 and the dividing lines DL9 to DL14 are at the same positions in the X direction, and the cutting end points of the dividing lines DL9 to DL14 coincide with the cutting end points of the dividing lines DL3 to DL8, respectively. The dividing lines DL9 to DL14 are connected to the cutting line CL2, and when the sheet metal W is cut to the center in the width direction of the elongated hole, the dividing lines DL9 to DL14 are then connected to the dividing lines DL3 to DL8, respectively.

Therefore, when the dividing lines DL9, DL10 are formed, the area between the dividing lines DL3, DL9 and the dividing lines DL4, DL10 becomes a scrap Sc1. When the dividing line DL11 is formed, the area between the dividing lines DL4, DL10 and the dividing lines DL5, DL11 becomes a scrap Sc2. When the dividing line DL12 is formed, the area between the dividing lines DL5, DL11 and the dividing lines DL6, DL12 becomes a scrap Sc3. When the dividing line DL13 is formed, the area between the dividing lines DL6, DL12 and the dividing lines DL7, DL13 becomes a scrap Sc4. When the dividing line DL14 is formed, the area between the dividing lines DL7, DL13 and the dividing lines DL8, DL14 becomes a scrap Sc5.

The dividing lines DL3 to DL8 are formed in any order and may be formed in the order from the dividing line DL8 to the dividing line DL3. The dividing lines DL9 to DL14 are formed in any order and may be formed in the order from the dividing line DL14 to the dividing line DL9. The dividing lines DL3 to DL8 may be formed after the formation of the dividing lines DL9 to DL14.

A case is considered where the sheet metal W is cut from the center in the width direction of the elongated hole toward the cutting line CL1 or CL2, which is opposite to the cutting direction illustrated in (c) and (d) of Figure 3A. In this case, the processing head 16 may collide with the end of the elongated hole at the position of the cutting line CL1 or CL2 (the end of the part on the elongated hole side), resulting in defective processing.

This is due to the following reasons. The cut portion of the sheet metal W tends to deflect downward due to the blowing of the assist gas during the cutting of the sheet metal W. The area between the cutting line CL1 and the cutting line CL2 is more likely to deflect downward toward the center than both ends of the cutting lines CL1, CL2 in the cutting direction. When the sheet metal W is cut from the center in the width direction of the elongated hole toward the cutting line CL1 or CL2, the processing head 16 moves from the center in the width direction, which is a relatively low position, to the end area of the part on the elongated hole side at the cutting line CL1 or CL2. At this time, the processing head 16 has descended to the low position by the action of the tracking sensor and may thus collide with the end of the part on the elongated hole side. In particular, the center is lower than both ends in the cutting direction, thus increasing the risk of collision.

As illustrated in (c) and (d) of Figure 3A, when the sheet metal W is cut from the cutting line CL1 or CL2 toward the center in the width direction of the elongated hole, the processing head 16 moves from the area near the cutting line CL1 or CL2 at the low position toward the center at the high position. Hence the processing head 16 does not descend and hardly collides with the sheet metal W.

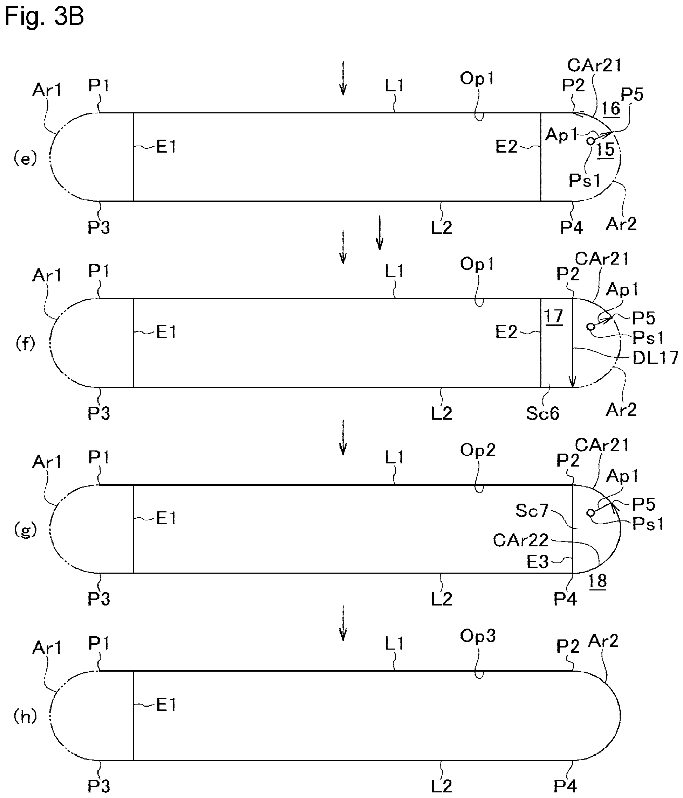

When the scraps Sc1 to Sc5 fall between the skids 13, as illustrated in (e) of Figure 3B, a rectangular opening Op1 is formed between the cutting line CL1 and the cutting line CL2. At this time, the positions of the cutting lines CL1, CL2 become the straight lines L1, L2 of the elongated hole, respectively. The positions of the dividing lines DL3, DL9 become an end E1 of the opening Op1, and the positions of the dividing lines DL8, DL14 become an end E2.

Even when one of the scraps Sc1 to Sc5 does not fall, the scraps Sc1 to Sc5 do not rise significantly since being small scraps, and hardly interfere with the processing head 16 to obstruct the movement of the processing head 16. This also applies to a scrap Sc6 and subsequent scraps, and also applies to scraps generated when holes of other shapes are formed. The following description assumes that the scrap falls.

As illustrated in (e) of Figure 3B, the laser processing machine 100 forms a pierced hole Ps1 in a semicircle surrounded by a straight line connecting the point P2 and the point P4 and the circular arc Ar2. The pierced hole Ps1 may be formed at any position in the semicircle. Subsequently, as a cutting step 15, the laser processing machine 100 performs irradiation with a laser beam along a cutting path from the pierced hole Ps1 to a point P5 on the circular arc Ar2 to form an approach Ap1 on the sheet metal W. The approach Ap1 is formed in the normal direction of the circular arc Ar2 at the point P5. Subsequently, as a cutting step 16, the laser processing machine 100 performs irradiation with a laser beam along a cutting path on the circular arc Ar2 from the point P5 to the point P2 to form a circular-arc shaped cutting line CAr21 on the sheet metal W.

As illustrated in (f) of Figure 3B, as a cutting step 17, the laser processing machine 100 performs irradiation with a laser beam along a cutting path formed of a straight line from the point P2 to the point P4 to form a dividing line DL17 on the sheet metal W. Then, the area between the end E2 and the dividing line DL17 becomes the scrap Sc6. When the scrap Sc6 falls, as illustrated in (g) of Figure 3B, the opening between the end E2 and the dividing line DL17 is added to the opening Op1 to form an opening Op2. The position of the dividing line DL17 newly becomes an end E3 of the opening Op2.

As illustrated in (g) of Figure 3B, as a cutting step 18, the laser processing machine 100 performs irradiation with a laser beam along a cutting path on the circular arc Ar2 from the point P4 to the point P5 to form a circular-arc shaped cutting line CAr22 on the sheet metal W. Then, a semicircular portion surrounded by the end E3 and the cutting lines CAr21, CAr22 becomes a scrap Sc7. When the scrap Sc7 falls, as illustrated in (h) of Figure 3B, the opening of the semicircular portion is added to the opening Op2 to form an opening Op3. At this time, the positions of the cutting lines CAr21, CAr22 become the circular arc Ar2.

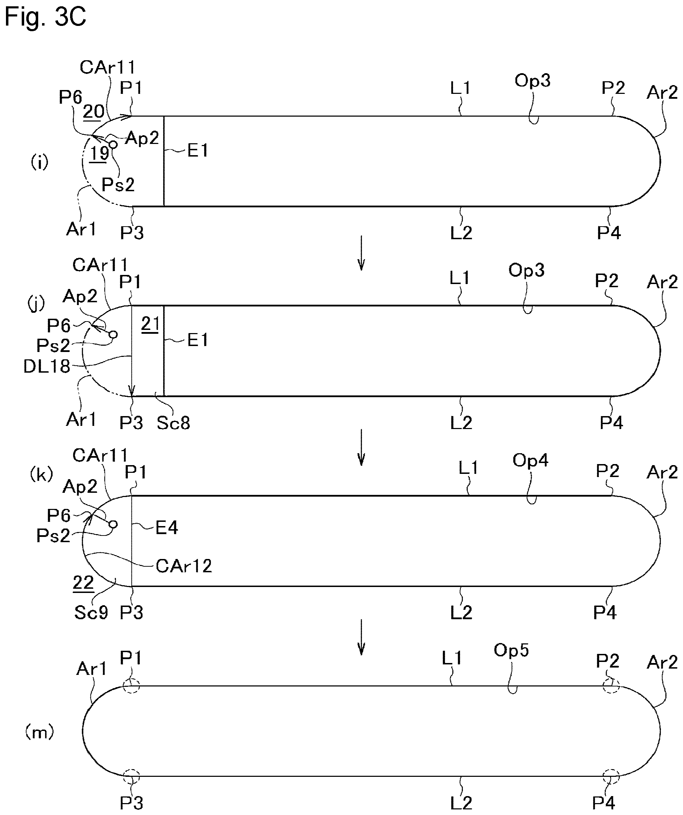

As illustrated in (i) of Figure 3C, the laser processing machine 100 forms a pierced hole Ps2 in a semicircle surrounded by a straight line connecting the point P1 and the point P3 and the circular arc Ar1. The pierced hole Ps2 may be formed at any position in the semicircle. Subsequently, as a cutting step 19, the laser processing machine 100 performs irradiation with a laser beam along a cutting path from the pierced hole Ps2 to a point P6 on the circular arc Ar1 to form an approach Ap2 on the sheet metal W. The approach Ap2 is formed in the normal direction of the circular arc Ar1 at the point P6. Subsequently, as a cutting step 20, the laser processing machine 100 performs irradiation with a laser beam along a cutting path on the circular arc Ar1 from the point P6 to the point P1 to form a circular-arc shaped cutting line CAr11 on the sheet metal W.

As illustrated in (j) of Figure 3C, as a cutting step 21, the laser processing machine 100 performs irradiation with a laser beam along a cutting path formed of a straight line from the point P1 to the point P3 to form a dividing line DL18 on the sheet metal W. Then, the area between the end E1 and the dividing line DL18 becomes a scrap Sc8. When the scrap Sc8 falls, as illustrated in (k) of Figure 3C, the opening between the end E1 and the dividing line DL18 is added to the opening Op3 to form an opening Op4. The position of the dividing line DL18 newly becomes an end E4 of the opening Op4.

As illustrated in (k) of Figure 3C, as a cutting step 22, the laser processing machine 100 performs irradiation with a laser beam along a cutting path on the circular arc Ar1 from the point P3 to the point P6 to form a circular-arc shaped cutting line CAr12 on the sheet metal W. Then, a semicircular portion surrounded by the end E4 and the cutting lines CAr11, CAr12 becomes a scrap Sc9. When the scrap Sc9 falls, as illustrated in (m) of Figure 3C, the opening of the semicircular portion is added to the opening Op4 to form an opening Op5. At this time, the positions of the cutting lines CAr11, CAr12 become the circular arc Ar1.

The order of the fall of the scraps Sc6, Sc7 according to (e) to (g) of Figure 3B and the fall of the scraps Sc8, Sc9 according to (i) to (k) of Figure 3C may be reversed.

As described above, the laser processing machine 100 cuts the sheet metal W based on the processing program for cutting the sheet metal W, for example, in the cutting steps 1 to 22, created by the CAM device 2, to form an elongated hole with the opening Op5 in the sheet metal W. According to the laser processing method (elongated hole forming method) executed by the laser processing machine 100, dividing marks are formed only at the points P1 to P4 as surrounded by dotted circles in (m) of Figure 3C. Moreover, with the points P1 to P4 being both ends of the straight lines L1, L2, the processing quality is better than that when a dividing mark is present in an intermediate portion between the straight lines L1, L2.

A sliding component that slides in the longitudinal direction of the elongated hole may be mounted in the elongated hole formed in the part. There may be a step in the dividing mark, and the presence of the dividing mark in the intermediate portion between the straight lines L1, L2 may cause deterioration in the operation feeling when the slide component is slid in the elongated hole. The dividing marks present at both ends of the straight lines L1, L2 hardly cause deterioration in the operation feeling.

### <Elongated hole (width of more than 40 mm)>

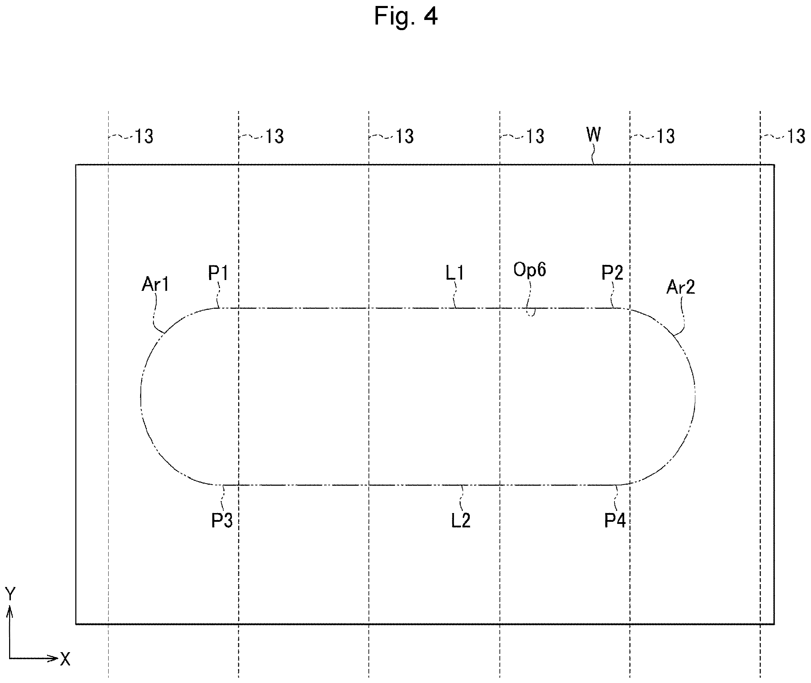

Figure 4 illustrates an elongated hole with a relatively wide width formed in a part. When the laser processing machine 100 cuts the sheet metal W at a position indicated by a dashed double-dotted line, an elongated hole with an opening Op6 is formed. The outline of the part is not illustrated also in Figure 4.

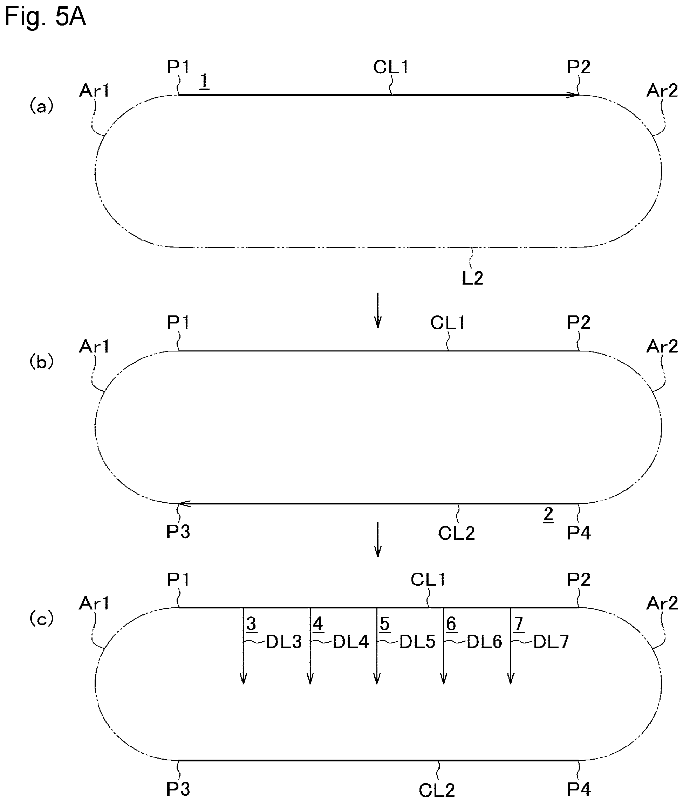

When the width of the elongated hole exceeds 40 mm as an example, the CAM device 2 creates a processing program for cutting the sheet metal W in cutting steps illustrated in Figures 5A to 5F. The laser processing machine 100 cuts the sheet metal W in the cutting steps illustrated in Figures 5A to 5F based on the processing program. In the cutting steps illustrated in Figures 5A to 5F, the description of the cutting step common to the cutting steps illustrated in Figures 3A to 3C may be omitted or simplified.

As illustrated in (a) and (b) of Figure 5A, the laser processing machine 100 forms a cutting line CL1 on a straight line L1 as a cutting step 1 and forms a cutting line CL2 on a straight line L2 as a cutting step 2 as in the case of forming the elongated hole with a width of 40 mm or less. The laser processing machine 100 continuously cuts each of the straight lines L1, L2 of the elongated hole along one cutting path without breaking up the cutting in the middle. The cutting path set on the straight line L1 is a first cutting path, and the cutting line CL1 is a first cutting line. The cutting path set on the straight line L2 is a second cutting path, and the cutting line CL2 is a second cutting line.

As illustrated in (c) of Figure 5A, as cutting steps 3 to 7, the laser processing machine 100 performs irradiation with a laser beam along each of cutting paths set to be cut in a direction orthogonal to the cutting line CL1 to the center in the width direction of the elongated hole, with the cutting line CL1 as the cutting start points, thereby forming dividing lines DL3 to DL7 on the sheet metal W. The dividing lines DL3 to DL7 connected to the cutting line CL1 are first dividing lines.

The dividing lines DL3 to DL7 (third cutting paths) are dividing lines (cutting paths) for cutting the cutting line CL1 side of the area between the cutting line CL1 (first cutting path) and the cutting line CL2 (second cutting path).

Here, the number of dividing lines in the direction orthogonal to the cutting line CL1 is five, but the number of dividing lines is set in accordance with the length of the elongated hole. Similarly, the cutting end points of the dividing lines DL3 to DL7 are preferably located at the center in the width direction of the elongated hole, but only have to be located at the intermediate positions between the cutting line CL1 and the cutting line CL2.

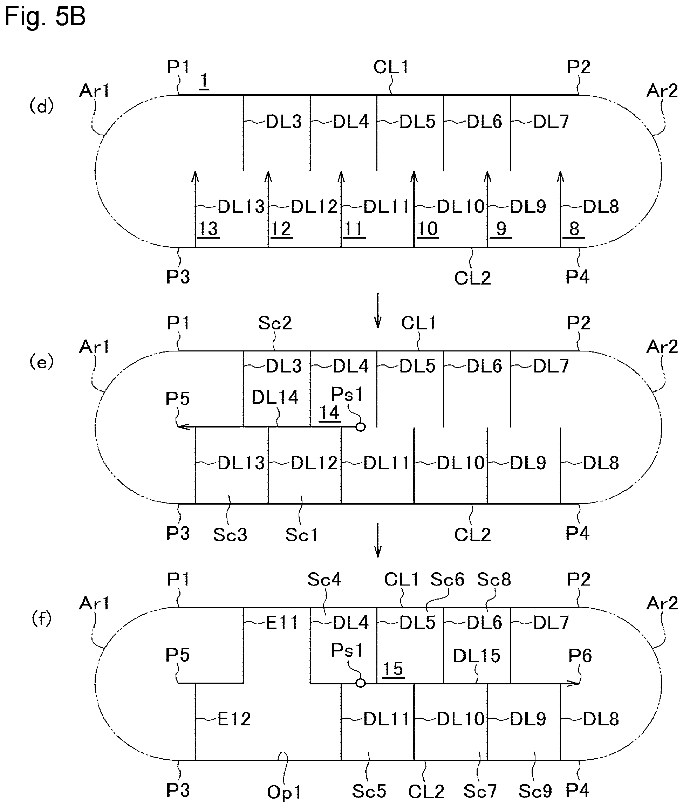

As illustrated in (d) of Figure 5B, as cutting steps 8 to 13, the laser processing machine 100 performs irradiation with a laser beam along each of cutting paths set so as to be cut in a direction orthogonal to the cutting line CL2 to the center in the width direction of the elongated hole, with the cutting line CL2 as the cutting start points, thereby forming dividing lines DL8 to DL13 on the sheet metal W. The dividing lines DL8 to DL13 connected to the cutting line CL2 are second dividing lines. The dividing lines DL8 to DL13 (fourth cutting paths) are dividing lines (cutting paths) for cutting the cutting line CL2 side of the area between the cutting line CL1 and the cutting line CL2.

Here, the number of dividing lines in the direction orthogonal to the cutting line CL2 is six, which is one more than the number of dividing lines DL3 to DL7 in the direction orthogonal to the cutting line CL1. The number of dividing lines in the direction orthogonal to the cutting line CL2 is not limited to one more than the number of dividing lines in the direction orthogonal to the cutting line CL1, but may be the same, one more or one less, or two more or two less. At this time, the positions of the dividing lines DL3 to DL7 and the dividing lines DL8 to DL13 in the X direction are shifted, and the cutting end points of the dividing lines DL8 to DL13 do not coincide with the cutting end points of the dividing lines DL3 to DL7. That is, the dividing lines DL3 to DL7 and the dividing lines DL8 to DL13 are alternately arranged in the X direction.

In order to form an elongated hole as wide as its width exceeds 40 mm, as in (d) of Figure 3A, when the end points of the plurality of dividing lines with the cutting line CL1 as the cutting start points is made to coincide with the end points of the plurality of dividing lines with the cutting line CL2 as the cutting start points, the cut area of the sheet metal W tends to deflect downward. Hence it is preferable to alternately arrange the plurality of dividing lines with the cutting line CL1 as the cutting start points and the plurality of dividing lines with the cutting line CL2 as the cutting start points.

As illustrated in (e) of Figure 5B, the laser processing machine 100 forms a pierced hole Ps1 at a position located at the center in the width direction of the elongated hole and not coinciding with the end points of the dividing lines DL3 to DL13. The pierced hole Ps1 is preferably formed at a position near the center of the length of the cutting lines CL1, CL2. In this example, the pierced hole Ps1 is formed between the end point of the dividing line DL11 and the end point of the dividing line DL5.

Following the formation of the pierced hole Ps1, as a cutting step 14, the laser processing machine 100 performs irradiation with a laser beam along a cutting path formed of a straight line from the pierced hole Ps1 to a point P5 that is at the same position in the X direction as the points P1, P3, thereby forming a dividing line DL14 parallel to the cutting lines CL1, CL2 on the sheet metal W. When the dividing line DL14 is formed, the areas between the dividing line DL11 and the dividing line DL12, between the dividing line DL4 and the dividing line DL3, and between the dividing line DL12 and the dividing line DL13 become scraps Sc1 to Sc3, respectively. The scraps Sc1 to Sc3 are formed in this order.

As illustrated in (f) of Figure 5B, an opening Op1 is formed when the scraps Sc1 to Sc3 fall. The positions of the dividing lines DL3, DL13 become ends E11, E12 of the opening Op1, respectively.

As a cutting step 15, the laser processing machine 100 performs irradiation with a laser beam along a cutting path formed of a straight line from the pierced hole Ps1 to a point P6 that is at the same position as the points P2, P4 in the X direction, thereby forming a dividing line DL15 parallel to the cutting lines CL1, CL2 on the sheet metal W. When the dividing line DL15 is formed, the areas between the dividing line DL4 and the dividing line DL5, between the dividing line DL11 and the dividing line DL10, between the dividing line DL5 and the dividing line DL6, between the dividing line DL10 and the dividing line DL9, between the dividing line DL6 and the dividing line DL7, and between the dividing line DL9 and the dividing line DL8 become scraps Sc4 to Sc9, respectively. The scraps Sc4 to Sc9 are formed in this order.

The step of forming the dividing lines DL14, DL15 is a step of performing irradiation with a laser beam along a fifth cutting path in the X direction that connects the respective end points of the dividing lines DL3 to DL7 and the respective end points of the dividing lines DL8 to DL13. Thus, the step of forming the dividing lines DL14, DL15 is a step of forming a plurality of scraps in the area between the cutting line CL1 and the cutting line CL2.

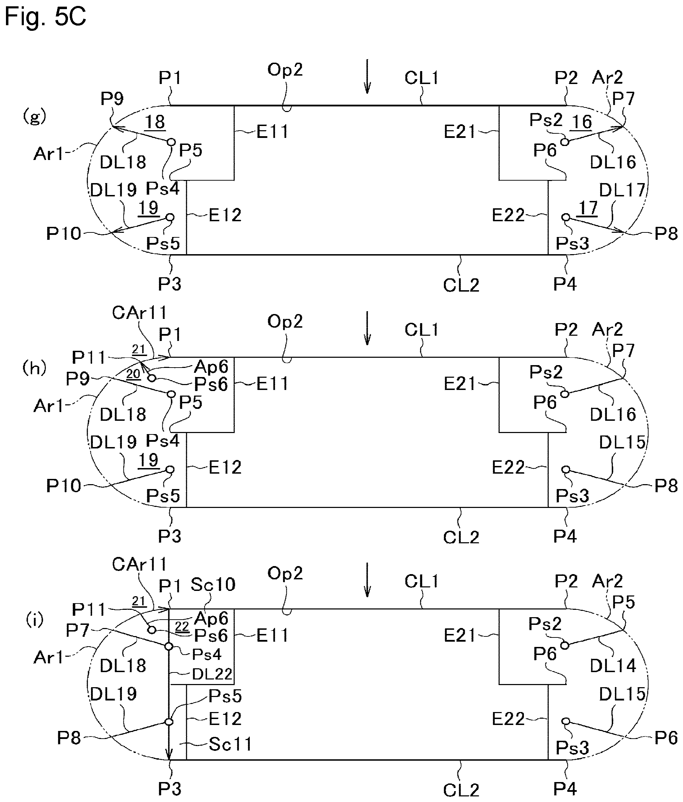

As illustrated in (g) of Figure 5C, when the scraps Sc4 to Sc9 fall, the opening of the dividing lines DL4 to DL7, DL8 to DL11 is added to the opening Op1 to form an opening Op2. The positions of the dividing lines DL7, DL8 become ends E21, E22 of the opening Op2, respectively.

As illustrated in (g) of Figure 5C, the laser processing machine 100 forms a pierced hole Ps2 on a straight line connecting the point P2 and the point P4, and as a cutting step 16, the laser processing machine 100 performs irradiation with a laser beam along a cutting path from the pierced hole Ps2 to a point P7 on a circular arc Ar2 to form a dividing line DL16 on the sheet metal W. The laser processing machine 100 forms a pierced hole Ps3 on the straight line connecting the point P2 and the point P4, and as a cutting step 17, the laser processing machine 100 performs irradiation with a laser beam along a cutting path from the pierced hole Ps3 to a point P8 on the circular arc Ar2 to form a dividing line DL17 on the sheet metal W. The dividing lines DL16, DL17 may be parallel to the X direction, but as illustrated in the drawing, the dividing lines DL16, DL17 may be oriented diagonally so that the distance therebetween increases as the cutting progresses.

Subsequently, as illustrated in (g) of Figure 5C, the laser processing machine 100 forms a pierced hole Ps4 on a straight line connecting the point P1 and the point P3, and as a cutting step 18, the laser processing machine 100 performs irradiation with a laser beam along a cutting path from the pierced hole Ps4 to a point P9 on a circular arc Ar1 to form a dividing line DL18 on the sheet metal W. The laser processing machine 100 forms a pierced hole Ps5 on the straight line connecting the point P1 and the point P3, and as a cutting step 19, the laser processing machine 100 performs irradiation with a laser beam along a cutting path from the pierced hole Ps5 to a point P10 on the circular arc Ar1 to form a dividing line DL19 on the sheet metal W. The dividing lines DL18, DL19 may also be parallel to the X direction, but as illustrated in the drawing, the dividing lines DL18, DL19 may be oriented diagonally so that the distance therebetween increases as the cutting progresses.

As illustrated in (h) of Figure 5C, the laser processing machine 100 forms a pierced hole Ps6 in a semicircle surrounded by the straight line connecting the point P1 and the point P3 and the circular arc Ar1. The pierced hole Ps6 may be formed at any position in the semicircle. Subsequently, as a cutting step 20, the laser processing machine 100 performs irradiation with a laser beam along a cutting path from the pierced hole Ps6 to a point P11 on the circular arc Ar1 to form an approach Ap6 on the sheet metal W. The approach Ap6 is formed in the normal direction of the circular arc Ar1 at the point P11. Subsequently, as a cutting step 21, the laser processing machine 100 performs irradiation with a laser beam along a cutting path on the circular arc Ar1 from the point P11 to the point P1 to form a circular-arc shaped cutting line CAr11 on the sheet metal W.

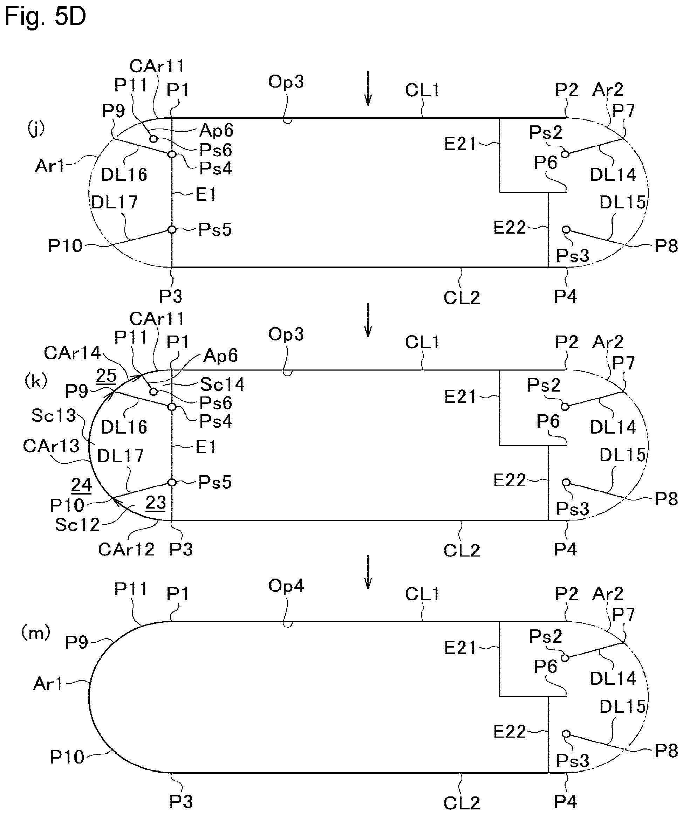

As illustrated in (i) of Figure 5C, as a cutting step 22, the laser processing machine 100 performs irradiation with a laser beam along a cutting path formed of a straight line from the point P1 to the point P3 to form a dividing line DL22 on the sheet metal W. Then, the areas between the end E11 and the dividing line DL22 and between the end E12 and the dividing line DL22 become scraps Sc10, Sc11, respectively. The scraps Sc10, Sc11 are formed in this order. When the scraps Sc10, Sc11 fall, as illustrated in (j) of Figure 5D, the opening between the end E11 and the dividing line DL22 and the opening between the end E12 and the dividing line DL22 are added to the opening Op2 to form an opening Op3. The position of the dividing line DL22 becomes an end E1 of the opening Op3.

As illustrated in (k) of Figure 5D, as cutting steps 23 to 25, the laser processing machine 100 performs irradiation with a laser beam along each of cutting paths on the circular arc Ar1 from the point P3 to the point P10, from the point P10 to the point P9, and from the point P9 to the point P11, to form circular-arc shaped cutting lines CAr12 to CAr14 on the sheet metal W. Then, the semicircular portions surrounded by the end E1 and the cutting lines CAr11 to CAr14 become scraps Sc12 to Sc14. The scraps Sc12 to Sc14 are formed in this order.

When the scraps Sc12 to Sc14 fall, as illustrated in (m) of Figure 5D, the opening of the semicircular portion is added to the opening Op3 to form an opening Op4. At this time, the positions of the cutting lines CAr11 to CAr14 become the circular arc Ar1.

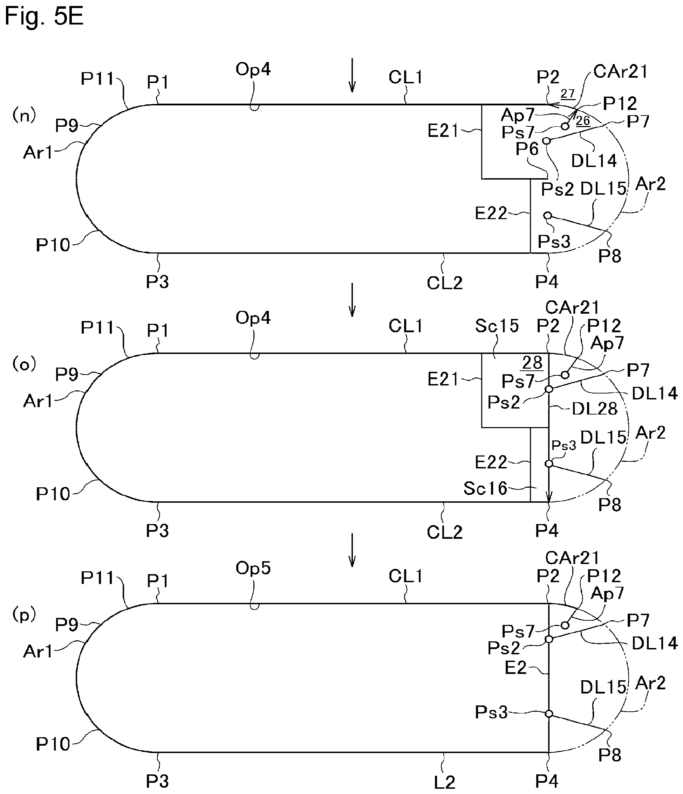

As illustrated in (n) of Figure 5E, the laser processing machine 100 forms a pierced hole Ps7 in a semicircle surrounded by the straight line connecting the point P2 and the point P4 and the circular arc Ar2. The pierced hole Ps7 may be formed at any position in the semicircle. Subsequently, as a cutting step 26, the laser processing machine 100 performs irradiation with a laser beam along a cutting path from the pierced hole Ps7 to a point P12 on the circular arc Ar2 to form an approach Ap7 on the sheet metal W. The approach Ap7 is formed in the normal direction of the circular arc Ar2 at the point P12. Subsequently, as a cutting step 27, the laser processing machine 100 performs irradiation with a laser beam along a cutting path on the circular arc Ar2 from the point P12 to the point P2 to form a circular-arc shaped cutting line CAr21 on the sheet metal W.

As illustrated in (o) of Figure 5E, as a cutting step 28, the laser processing machine 100 performs irradiation with a laser beam along a cutting path formed of a straight line from the point P2 to the point P4 to form a dividing line DL28 on the sheet metal W. Then, the areas between the end E21 and the dividing line DL28 and between the end E22 and the dividing line DL28 become scraps Sc15, Sc16, respectively. The scraps Sc15, Sc16 are formed in this order. When the scraps Sc15, Sc16 fall, as illustrated in (p) of Figure 5E, the opening between the end E21 and the dividing line DL28 and the opening between the end E22 and the dividing line DL28 are added to the opening Op4 to form an opening Op5. The position of the dividing line DL28 becomes an end E2 of the opening Op5.

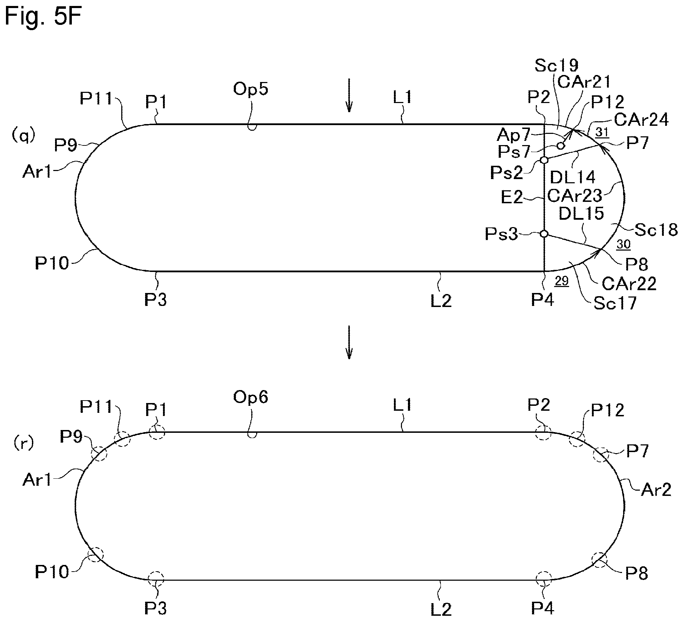

As illustrated in (q) of Figure 5F, as cutting steps 29 to 31, the laser processing machine 100 performs irradiation with a laser beam along each of cutting paths on the circular arc Ar2 from the point P4 to the point P8, from the point P8 to the point P7, and from the point P7 to the point P12, to form circular-arc shaped cutting lines CAr22 to CAr24 on the sheet metal W. Then, the semicircular portions surrounded by the end E2 and the cutting lines CAr21 to CAr24 become scraps Sc17 to Sc19. The scraps Sc17 to Sc19 are formed in this order.

When the scraps Sc17 to Sc19 fall, as illustrated in (r) of Figure 5F, the opening of the semicircular portion is added to the opening Op5 to form an opening Op6. At this time, the positions of the cutting lines CAr21 to CAr24 become the circular arc Ar2.

The order of the fall of the scraps Sc10 to Sc14 according to (h) and (i) of Figure 5C and (j) and (k) of Figure 5D and the fall of the scraps Sc15 to Sc19 according to (n) to (p) of Figure 5E and (q) of Figure 5F may be reversed.

As described above, the laser processing machine 100 cuts the sheet metal W based on the processing program for cutting the sheet metal W, for example, in the cutting steps 1 to 31, created by the CAM device 2, to form an elongated hole with the opening Op6 in the sheet metal W. According to the laser processing method (elongated hole forming method) executed by the laser processing machine 100, dividing marks are formed only at the points P1 to P4, P7 to P12 as surrounded by dotted circles in (r) of Figure 5F. Moreover, the points P1 to P4 are both ends of the straight lines L1, L2, and the points P7 to P12 are located at the circular arc Ar1 or Ar2, so that the operation feeling when the slide component is slid in the elongated hole hardly deteriorates.

### <Rectangular hole (width of 40 mm or less)>

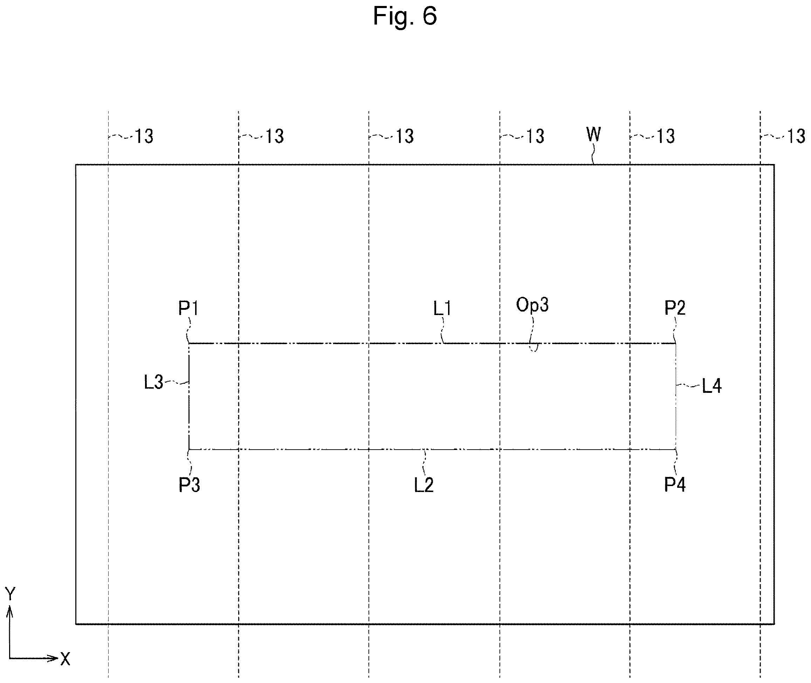

Figure 6 illustrates a rectangular hole with a relatively narrow width formed in a part. When the laser processing machine 100 cuts the sheet metal W at a position indicated by a dashed double-dotted line, a rectangular hole with an opening Op3 is formed. The outline of the part is not illustrated also in Figure 6. The rectangular hole is a rectangle surrounded by a straight line L1 connecting points P1, P2, a straight line L2 connecting points P3, P4, a straight line L3 connecting the points P1, P3, and a straight line L4 connecting the points P2, P4.

The point P1 is a first point, the point P2 is a second point, the point P3 is a third point, and the point P4 is a fourth point. The straight line L1 is a first straight line, and the straight line L2 is a second straight line. The straight line L1 connects points P1, P2, and the straight line L2 connects points P3, P4. A pair of straight lines L1, L2 facing each other are straight lines in the X direction that is a first direction. The pair of straight lines L3, L4 facing each other are straight lines in the Y direction that is a second direction orthogonal to the X direction. The straight lines L1, L2 are parallel and have the same length. The straight lines L1, L2 are the long sides of the rectangle, and the straight lines L3, L4 are the short sides of the rectangle. The straight lines L1, L2 are orthogonal to the skid 13.

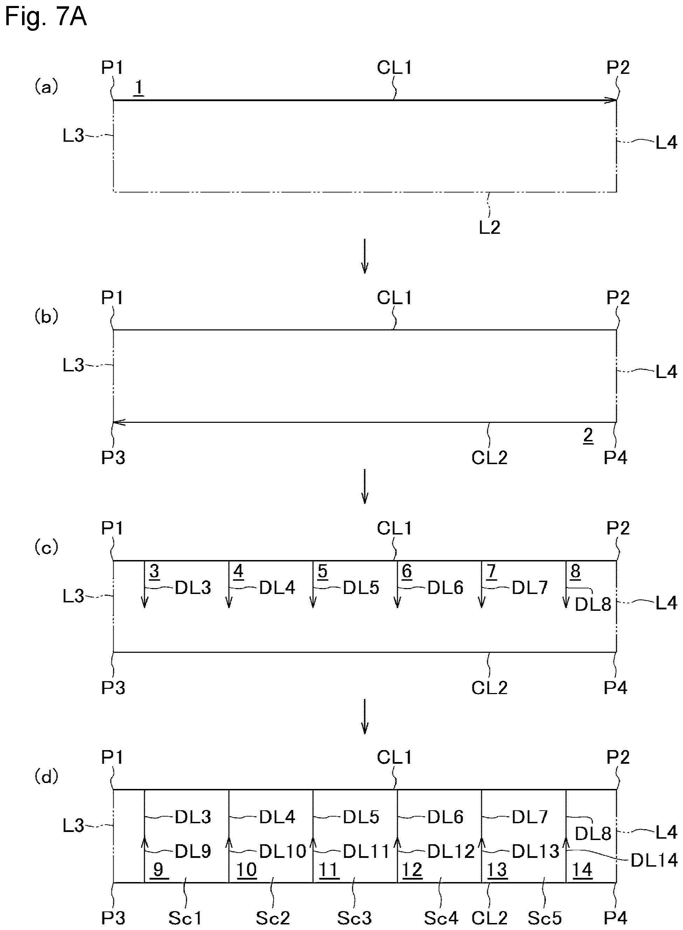

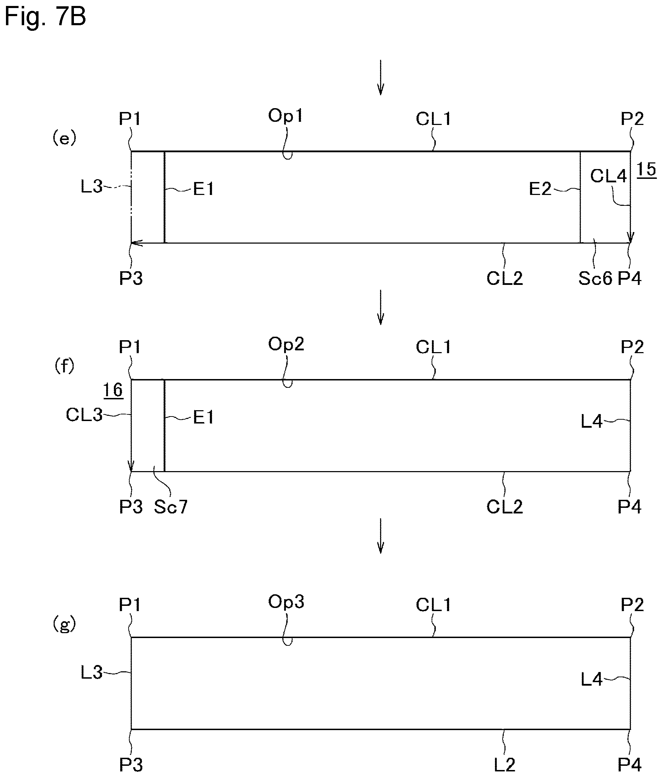

When the width (the distance between the long sides) of the rectangular hole is 40 mm or less as an example, the CAM device 2 creates a processing program for cutting the sheet metal W in cutting steps illustrated in Figures 7A and 7B. The laser processing machine 100 cuts the sheet metal W in the cutting steps illustrated in Figures 7A and 7B based on the processing program.

As illustrated in (a) of Figures 7A, as a cutting step 1, the laser processing machine 100 performs irradiation with a laser beam along a cutting path set on the straight line L1 from the point P1 to the point P2 to form a cutting line CL1 on the sheet metal W. The cutting path set on the straight line L1 is a first cutting path, and the cutting line CL1 is a first cutting line.

As illustrated in (b) of Figures 7A, as a cutting step 2, the laser processing machine 100 performs irradiation with a laser beam along a cutting path set on the straight line L2 from the point P4 to the point P3 to form a cutting line CL2 on the sheet metal W. The cutting path set on the straight line L2 is a second cutting path, and the cutting line CL2 is a second cutting line. The cutting step 1 and the cutting step 2 may be reversed. The cutting directions at the time of forming the cutting lines CL1, CL2 may be reversed.

As illustrated in (a) and (b) of Figures 7A, the laser processing machine 100 continuously cuts each of the straight lines L1, L2 of the rectangular hole along one cutting path without breaking up the cutting in the middle.

As illustrated in (c) of Figures 7A, as cutting steps 3 to 8, the laser processing machine 100 performs irradiation with a laser beam along each of cutting paths set to be cut in a direction orthogonal to the cutting line CL1 to the center in the width direction of the rectangular hole, with the cutting line CL1 as the cutting start points, thereby forming dividing lines DL3 to DL8 on the sheet metal W. The plurality of cutting paths in the direction orthogonal to the cutting line CL1 are third cutting paths, and the dividing lines DL3 to DL8 are first dividing lines. While being connected to the cutting line CL1, the dividing lines DL3 to DL8 do not reach the cutting line CL2 and are not connected to the cutting line CL2.

The dividing lines DL3 to DL8 (third cutting paths) are dividing lines (cutting paths) for cutting the cutting line CL1 side of the area between the cutting line CL1 (first cutting path) and the cutting line CL2 (second cutting path) .

Here, the number of dividing lines in the direction orthogonal to the cutting line CL1 is six, but the number of dividing lines is set in accordance with the length of the rectangular hole. The cutting end points of the dividing lines DL3 to DL8 are preferably located at the center in the width direction the rectangular hole, but only have to be located at the intermediate positions between the cutting line CL1 and the cutting line CL2.

As illustrated in (d) of Figures 7A, as cutting steps 9 to 14, the laser processing machine 100 performs irradiation with a laser beam along each of cutting paths set so as to be cut in a direction orthogonal to the cutting line CL2 to the center in the width direction of the rectangular hole, with the cutting line CL2 as the cutting start points, thereby forming dividing lines DL9 to DL14 on the sheet metal W. The plurality of cutting paths in the direction orthogonal to the cutting line CL2 are fourth cutting paths, and the dividing lines DL9 to DL14 are second dividing lines. The dividing lines DL9 to DL14 (fourth cutting paths) are dividing lines (cutting paths) for cutting the cutting line CL2 side of the area between the cutting line CL1 and the cutting line CL2.

At this time, the dividing lines DL3 to DL8 and the dividing lines DL9 to DL14 are at the same positions in the X direction, and the cutting end points of the dividing lines DL9 to DL14 coincide with the cutting end points of the dividing lines DL3 to DL8, respectively. The dividing lines DL9 to DL14 are connected to the cutting line CL2, and when the sheet metal W is cut to the center in the width direction of the rectangular hole, the dividing lines DL9 to DL14 are then connected to the dividing lines DL3 to DL8, respectively.

Therefore, when the dividing lines DL9, DL10 are formed, the area between the dividing lines DL3, DL9 and the dividing lines DL4, DL10 becomes a scrap Sc1. When the dividing line DL11 is formed, the area between the dividing lines DL4, DL10 and the dividing lines DL5, DL11 becomes a scrap Sc2. When the dividing line DL12 is formed, the area between the dividing lines DL5, DL11 and the dividing lines DL6, DL12 becomes a scrap Sc3. When the dividing line DL13 is formed, the area between the dividing lines DL6, DL12 and the dividing lines DL7, DL13 becomes a scrap Sc4. When the dividing line DL14 is formed, the area between the dividing lines DL7, DL13 and the dividing lines DL8, DL14 becomes a scrap Sc5.

The dividing lines DL3 to DL8 are formed in any order and may be formed in the order from the dividing line DL8 to the dividing line DL3. The dividing lines DL9 to DL14 are formed in any order and may be formed in the order from the dividing line DL14 to the dividing line DL9. The dividing lines DL3 to DL8 may be formed after the formation of the dividing lines DL9 to DL14.

As illustrated in (c) and (d) of Figures 7A, cutting the sheet metal W from the cutting line CL1 or CL2 toward the center in the width direction of the rectangular hole results in almost no processing defects.

When the scraps Sc1 to Sc5 fall, as illustrated in (e) of Figure 7B, a rectangular opening Op1 is formed between the cutting line CL1 and the cutting line CL2. The positions of the dividing lines DL3, DL9 become an end E1 of the opening Op1, and the positions of the dividing lines DL8, DL14 become an end E2.

As illustrated in (e) of Figure 7B, as a cutting step 15, the laser processing machine 100 performs irradiation with a laser beam along a cutting path formed of straight lines from the point P2 to the point P4 to form a cutting line CL4 on the sheet metal W. The cutting step 15 of forming the cutting line CL4 may be a step of linearly cutting from the point P4 to the point P2 in a direction opposite to the direction illustrated in (e) of Figure 7B. Then, the area between the end E2 and the cutting line CL4 becomes a scrap Sc6. When the scrap Sc6 falls, as illustrated in (f) of Figure 7B, the opening between the end E2 and the cutting line CL4 is added to the opening Op1 to form an opening Op2. The position of the cutting line CL4 becomes the straight line L4.

As illustrated in (f) of Figure 7B, as a cutting step 16, the laser processing machine 100 performs irradiation with a laser beam along a cutting path formed of a straight line from the point P1 to the point P3 to form a cutting line CL3 on the sheet metal W. The cutting step 16 of forming the cutting line CL3 may be a step of linearly cutting from the point P3 to the point P1 in a direction opposite to the direction illustrated in (f) of Figure 7B. Then, the area between the end E1 and the cutting line CL3 becomes a scrap Sc7. When the scrap Sc7 falls, as illustrated in (g) of Figure 7B, the opening between the end E1 and the cutting line CL3 is added to the opening Op2 to form an opening Op3. The position of the cutting line CL3 becomes the straight line L3. At this time, the cutting lines CL1, CL2 become the straight lines L1, L2, respectively. The order of the fall of the scraps Sc6, Sc7 may be reversed.

As described above, the laser processing machine 100 cuts the sheet metal W based on the processing program for cutting the sheet metal W, for example, in the cutting steps 1 to 16, created by the CAM device 2, to form a rectangular hole with the opening Op3 in the sheet metal W. According to the laser processing method (rectangular hole forming method) executed by the laser processing machine 100, there is no dividing mark on the straight lines L1 to L4, and the processing quality is good.

### <Rectangular hole (width of more than 40 mm)>

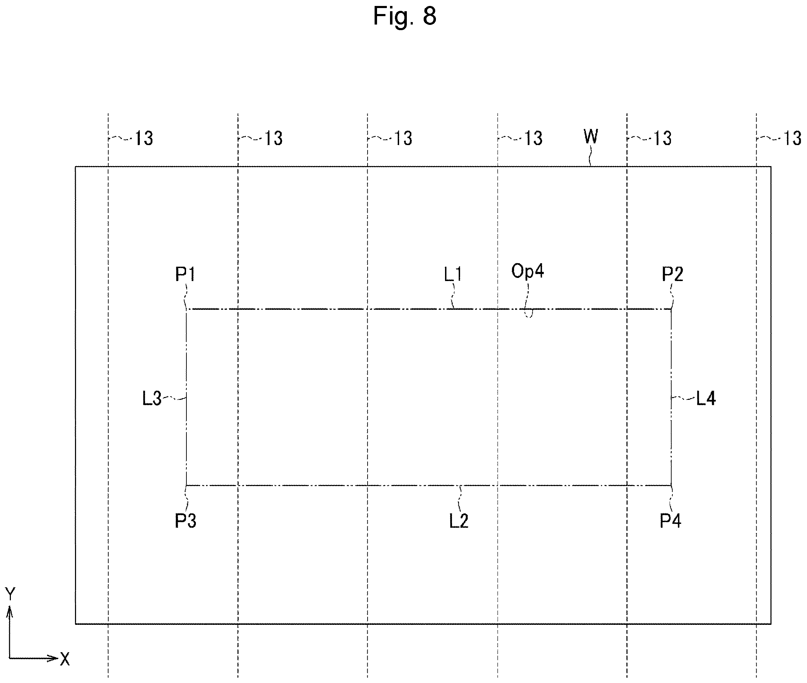

Figure 8 illustrates a rectangular hole formed with a relatively wide width formed in a part. When the laser processing machine 100 cuts the sheet metal W at a position indicated by a dashed double-dotted line, a rectangular hole with an opening Op4 is formed. The outline of the part is not illustrated also in Figure 8.

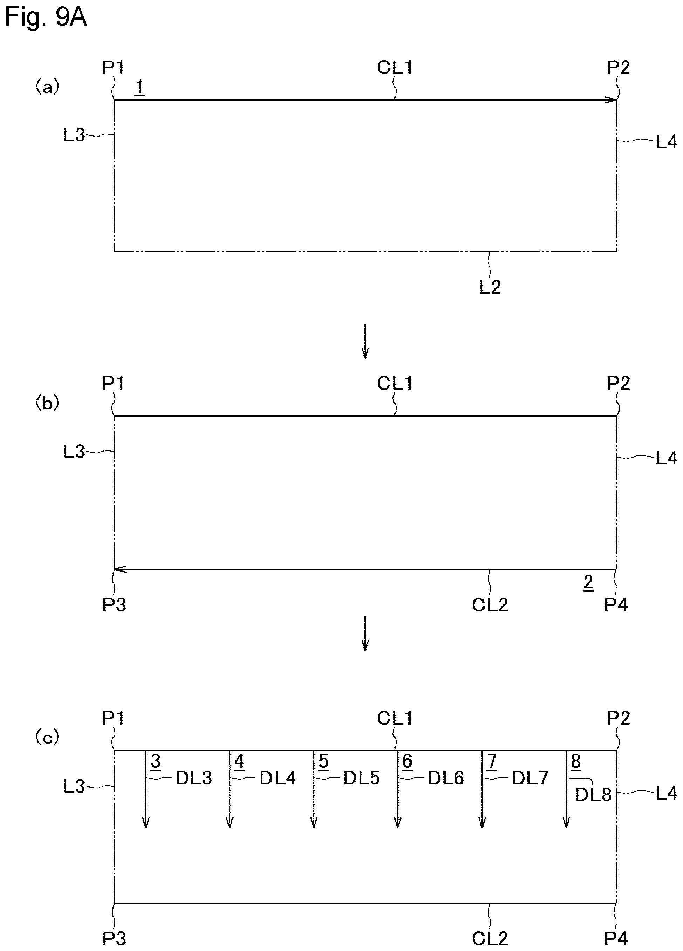

When the width of the rectangular hole exceeds 40 mm as an example, the CAM device 2 creates a processing program for cutting the sheet metal W in cutting steps illustrated in Figures 9A to 9C. The laser processing machine 100 cuts the sheet metal W in the cutting steps illustrated in Figures 9A to 9C based on the processing program. In the cutting steps illustrated in Figures 9A to 9C, the description of the cutting step common to the cutting steps illustrated in Figures 7A and 7B may be omitted or simplified.

As illustrated in (a) and (b) of Figure 9A, the laser processing machine 100 forms a cutting line CL1 on a straight line L1 as a cutting step 1 and forms a cutting line CL2 on a straight line L2 as a cutting step 2 as in the case of forming the rectangular hole with a width of 40 mm or less. The laser processing machine 100 continuously cuts each of the straight lines L1, L2 of the rectangular hole along one cutting path without breaking up the cutting in the middle. The cutting path set on the straight line L1 is a first cutting path, and the cutting line CL1 is a first cutting line. The cutting path set on the straight line L2 is a second cutting path, and the cutting line CL2 is a second cutting line.

As illustrated in (c) of Figure 9A, as cutting steps 3 to 8, the laser processing machine 100 performs irradiation with a laser beam along each of cutting paths set to be cut in a direction orthogonal to the cutting line CL1 to the center in the width direction of the rectangular hole, with the cutting line CL1 as the cutting start points, thereby forming dividing lines DL3 to DL8 on the sheet metal W. The plurality of cutting paths in the direction orthogonal to the cutting line CL1 are third cutting paths, and the dividing lines DL3 to DL8 connected to the cutting line CL1 are first dividing lines.

The dividing lines DL3 to DL8 (third cutting paths) are dividing lines (cutting paths) for cutting the cutting line CL1 side of the area between the cutting line CL1 (first cutting path) and the cutting line CL2 (second cutting path) .

Here, the number of dividing lines in the direction orthogonal to the cutting line CL1 is six, but the number of dividing lines is set in accordance with the length of the rectangular hole. Similarly, the cutting end points of the dividing lines DL3 to DL8 are preferably located at the center in the width direction of the rectangular hole, but only have to be located at the intermediate positions between the cutting line CL1 and the cutting line CL2.

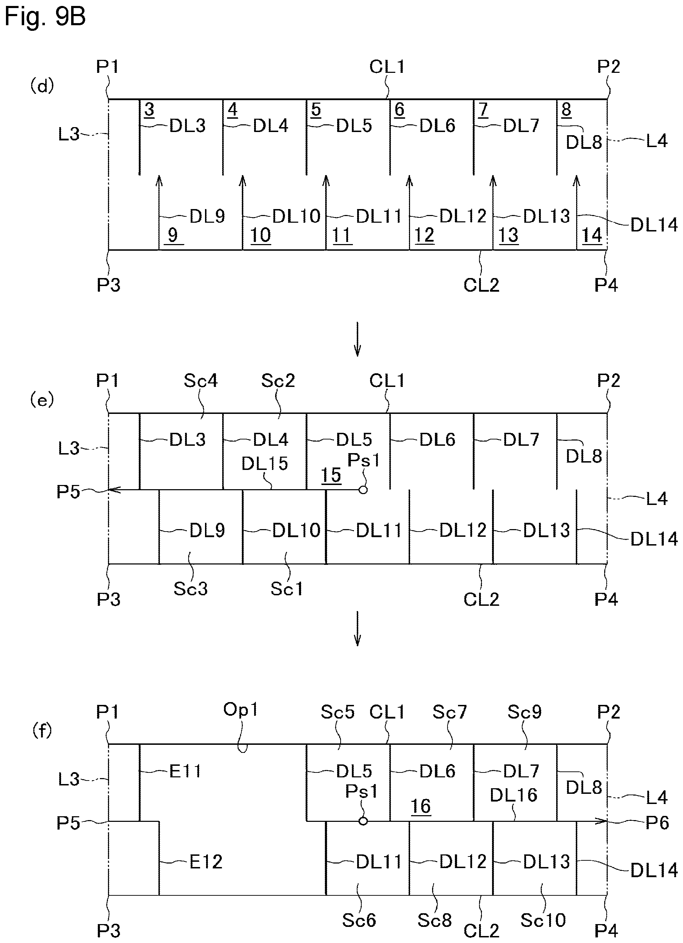

As illustrated in (d) of Figure 9B, as cutting steps 9 to 14, the laser processing machine 100 performs irradiation with a laser beam along each of cutting paths set so as to be cut in a direction orthogonal to the cutting line CL2 to the center in the width direction of the rectangular hole, with the cutting line CL2 as the cutting start points, thereby forming dividing lines DL9 to DL14 on the sheet metal W. The plurality of cutting paths in the direction orthogonal to the cutting line CL2 are fourth cutting paths, and the dividing lines DL9 to DL14 connected to the cutting line CL2 are second dividing lines. The dividing lines DL9 to DL14 (fourth cutting paths) are dividing lines (cutting paths) for cutting the cutting line CL2 side of the area between the cutting line CL1 and the cutting line CL2.

Here, the number of dividing lines in the direction orthogonal to the cutting line CL2 is six, which is the same as the number of dividing lines in the direction orthogonal to the cutting line CL1. The number of dividing lines in the direction orthogonal to the cutting line CL2 is not limited to the same as that of the dividing lines in the direction orthogonal to the cutting line CL1, but may be one more or one less, or two more or two less. At this time, the positions of the dividing lines DL3 to DL8 and the dividing lines DL9 to DL14 in the X direction are shifted, and the end points of the dividing lines DL9 to DL14 do not coincide with the end points of the dividing lines DL3 to DL8. That is, the dividing lines DL3 to DL8 and the dividing lines DL9 to DL14 are alternately arranged in the X direction.

In order to form a rectangular hole as wide as its width exceeds 40 mm, as in (d) of Figure 7A, when the end points of the plurality of dividing lines with the cutting line CL1 as the cutting start points are made to coincide with the end points of the plurality of dividing lines with the cutting line CL2 as the cutting start points, the cut portion of the sheet metal W tends to deflect downward. Hence it is preferable to alternately arrange the plurality of dividing lines with the cutting line CL1 as the cutting start points and the plurality of dividing lines with the cutting line CL2 as the cutting start points.

As illustrated in (e) of Figure 9B, the laser processing machine 100 forms a pierced hole Ps1 at a position located at the center in the width direction of the rectangular hole and not coinciding with the end points of the dividing lines DL3 to DL14. The pierced hole Ps1 is preferably formed at a position near the center of the length of the cutting lines CL1, CL2. In this example, the pierced hole Ps1 is formed between the end point of the dividing line DL11 and the end point of the dividing line DL6.

Following the formation of the pierced hole Ps1, as a cutting step 15, the laser processing machine 100 performs irradiation with a laser beam along a cutting path from the pierced hole Ps1 to a point P5 that is at the same position in the X direction as the points P1, P3, thereby forming a dividing line DL15 parallel to the cutting lines CL1, CL2 on the sheet metal W. When the dividing line DL15 is formed, the areas between the dividing line DL11 and the dividing line DL10, between the dividing line DL5 and the dividing line DL4, between the dividing line DL10 and the dividing line DL9, and between the dividing line DL4 and the dividing line DL3 become scraps Sc1 to Sc4, respectively. The scraps Sc1 to Sc4 are formed in this order.

As illustrated in (f) of Figure 9B, an opening Op1 is formed when the scraps Sc1 to Sc4 fall. The positions of the dividing lines DL3, DL9 become ends E11, E12 of the opening Op1, respectively.

As a cutting step 16, the laser processing machine 100 performs irradiation with a laser beam along a cutting path from the pierced hole Ps1 to a point P6 that is at the same position as the points P2, P4 in the X direction, thereby forming a dividing line DL16 parallel to the cutting lines CL1, CL2 on the sheet metal W. When the dividing line DL16 is formed, the areas between the dividing line DL5 and the dividing line DL6, between the dividing line DL11 and the dividing line DL12, between the dividing line DL6 and the dividing line DL7, between the dividing line DL12 and the dividing line DL13, between the dividing line DL7 and the dividing line DL8, and between the dividing line DL13 and the dividing line DL14 become scraps Sc5 to Sc10, respectively. The scraps Sc5 to Sc10 are formed in this order.

The step of forming the dividing lines DL15, DL16 is a step of performing irradiation with a laser beam along a fifth cutting path in the X direction that connects the respective end points of the dividing lines DL3 to DL8 and the respective end points of the dividing lines DL9 to DL14. Thus, the step of forming the dividing lines DL15, DL16 is a step of forming a plurality of scraps in the area between the cutting line CL1 and the cutting line CL2.

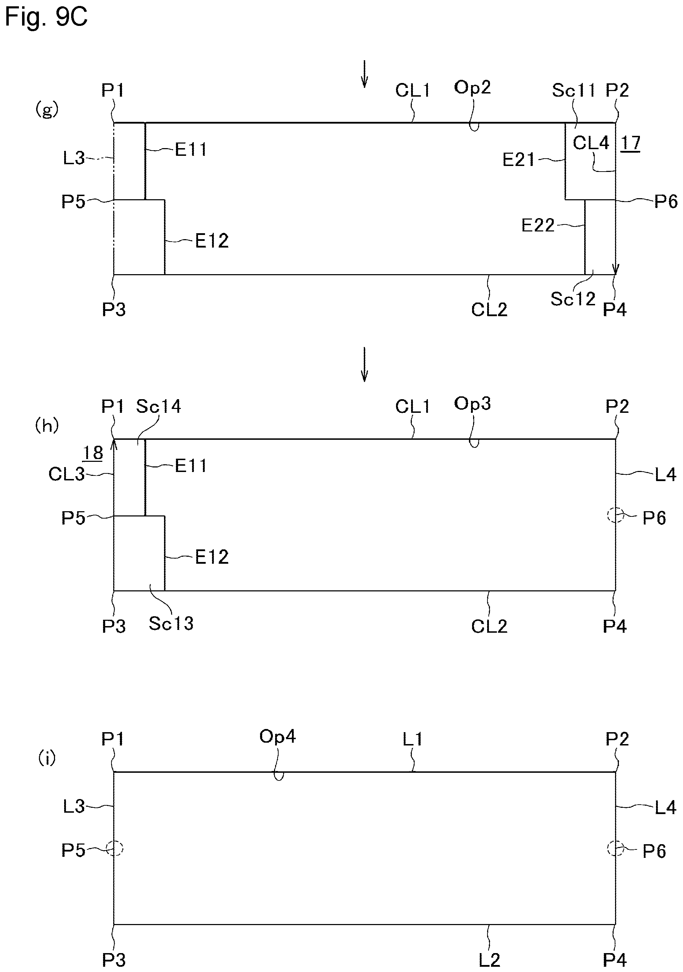

As illustrated in (g) of Figure 9C, when the scraps Sc5 to Sc10 fall, the opening of the dividing lines DL5 to DL8, DL11 to DL14 is added to the opening Op1 to form an opening Op2. The positions of the dividing lines DL8, DL14 become ends E21, E22 of the opening Op2, respectively.

As illustrated in (g) of Figure 9C, as a cutting step 17, the laser processing machine 100 performs irradiation with a laser beam along a cutting path formed of a straight line from the point P2 to the point P4 to form a cutting line CL4 on the sheet metal W. The cutting step 17 of forming the cutting line CL4 may be a step of linearly cutting from the point P4 to the point P2 in a direction opposite to the direction illustrated in (g) of Figure 9C. Then, the areas between the end E21 and the cutting line CL4 and between the end E22 and the cutting line CL4 become scraps Sc11, Sc12, respectively. The scraps Sc11, Sc12 are formed in this order. When the scraps Sc11, Sc12 fall, as illustrated in (h) of Figure 9C, the openings between the end E21 and the cutting line CL4 and between the end E22 and the cutting line CL4 are added to the opening Op2 to form an opening Op3. The position of the cutting line CL4 becomes a straight line L4.

As illustrated in (h) of Figure 9C, as a cutting step 18, the laser processing machine 100 performs irradiation with a laser beam along a cutting path formed of a straight line from the point P3 to the point P1 to form a cutting line CL3 on the sheet metal W. The cutting step 18 of forming the cutting line CL3 may be a step of linearly cutting from the point P1 to the point P3 in a direction opposite to the direction illustrated in (h) of Figure 9C. Then, the areas between the end E12 and the cutting line CL3 and between the end E11 and the cutting line CL3 become scraps Sc13, Sc14, respectively. The scraps Sc13, Sc14 are formed in this order. When the scraps Sc13, Sc14 fall, as illustrated in (i) of Figure 9C, the openings between the end E11 and the cutting line CL3 and between the end E12 and the cutting line CL3 are added to the opening Op3 to form an opening Op4. The position of the cutting line CL3 becomes a straight line L3. The order of the fall of the scraps Sc11, Sc12 and the scraps Sc13, Sc14 may be reversed.

As described above, the laser processing machine 100 cuts the sheet metal W based on the processing program for cutting the sheet metal W, for example, in the cutting steps 1 to 18, created by the CAM device 2, to form a rectangular hole with the opening Op4 in the sheet metal W. According to the laser processing method (rectangular hole forming method) executed by the laser processing machine 100, dividing marks are formed only at the points P5, P6 as surrounded by dotted circles in (i) of Figure 9C. There is no dividing mark on the straight lines L1, L2, and the processing quality is good.

### <Round hole (diameter less than 80 mm)>

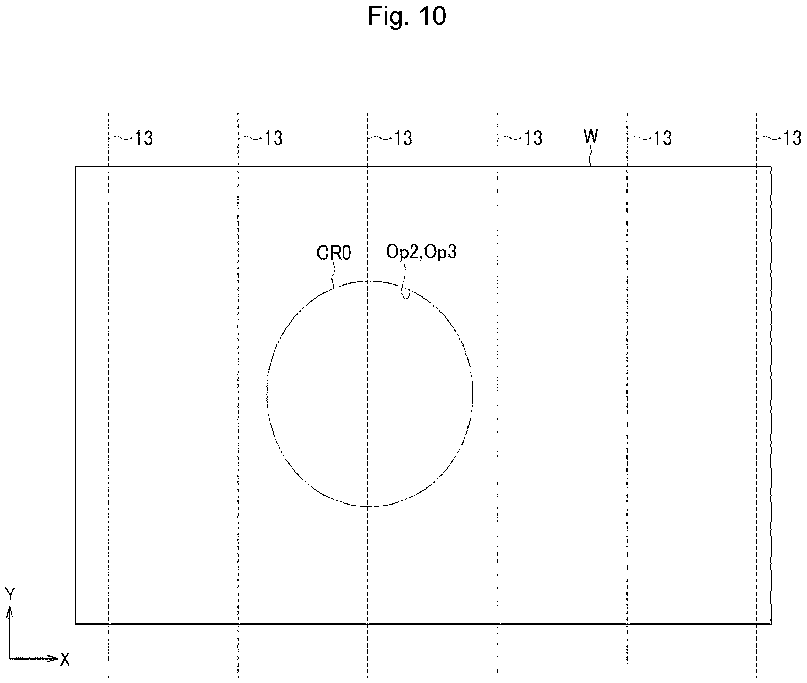

Figures 10-16 show embodiments according to the invention.

Figure 10 illustrates a round hole formed in a part. When the laser processing machine 100 cuts the sheet metal W along a circle CR0 indicated by a dashed double-dotted line, a round hole with a circular opening Op2 or Op3 is formed. The outline of the part is not illustrated also in Figure 10. A portion to be cut as a round hole (a hole formation area) may be located on one skid 13 as illustrated in Figure 10 or on two or more adjacent skids 13, depending on the diameter of the round hole.

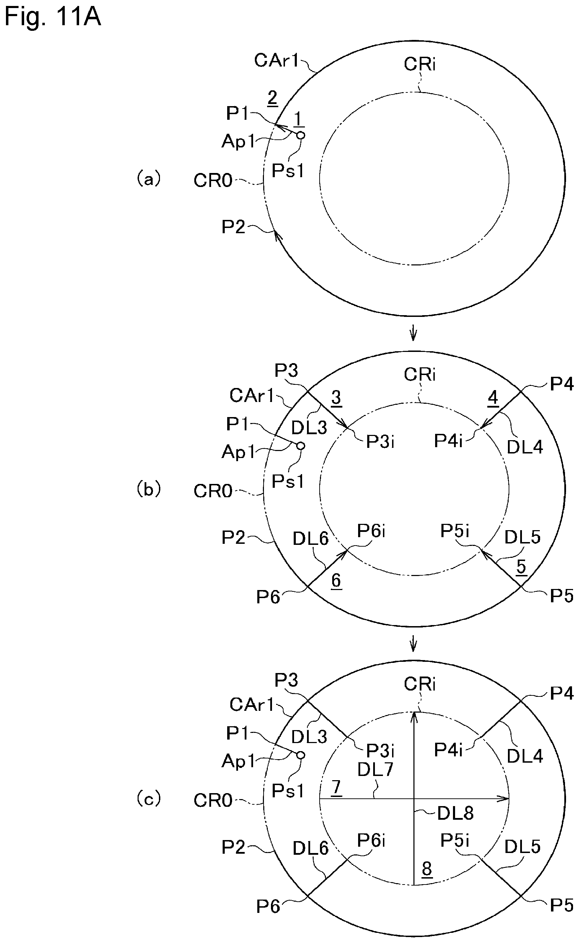

It is preferable that the laser processing machine 100 divide the area to be cut as a round hole differently depending on the diameter of the round hole. As an example, when the diameter of the round hole is less than 80 mm, which is a relatively small diameter, the CAM device 2 creates a processing program for cutting the sheet metal W in cutting steps illustrated in Figures 11A to 11C. The laser processing machine 100 cuts the sheet metal W in the cutting steps illustrated in Figures 11A to 11C based on the processing program.

As illustrated in (a) of Figure 11A, the CAM device 2 sets a virtual circle CRi concentric with the circle CR0 and having a smaller diameter than the circle CR0 (hereinafter referred to as a virtual circle CRi). The laser processing machine 100 forms a pierced hole Ps1 at any position between the circle CR0 and the virtual circle CRi. Subsequently, as a cutting step 1, the laser processing machine 100 performs irradiation with a laser beam along a cutting path from the pierced hole Ps1 to a point P1 on the circle CR0 to form an approach Ap1 on the sheet metal W. The approach Ap1 is formed in the normal direction of the circle CR0 at the point P1. Subsequently, as a cutting step 2, the laser processing machine 100 performs irradiation with a laser beam along a circular-arc shaped cutting path on the circle CR0, which is a major arc from the point P1 to a point P2, to form a circular-arc shaped cutting line CArl on the sheet metal W.

The circular-arc shaped cutting line CArl from the point P1 to the point P2 has an angle greater than 180 and preferably has an angle greater than 270 degrees. The major arc from the point P1 to the point P2 is a first circular arc, and the cutting path set on the first circular arc is a first cutting path. The cutting line CArl is a first cutting line.

As will be described in detail later, an area of a minor arc from the point P1 to the point P2 is a portion connected to the sheet metal W until immediately before the final step of forming the round hole in the sheet metal **W.** It is preferable to set the positions of the point P1 and the point P2 so that the straight line connecting the point P1 and the point P2 is parallel to the skid 13.

As illustrated in (b) of Figure 11A, as cutting steps 3 to 6, the laser processing machine 100 performs irradiation with a laser beam along each of four cutting paths arranged at equal angular intervals in the area between the cutting line CArl and the virtual circle CRi to form dividing lines DL3 to DL6 on the sheet metal W. The number of dividing lines for cutting the area between the cutting line CArl and the virtual circle CRi is not limited to four but may be another number. The dividing lines DL3 to DL6 extend toward the center of the virtual circle CRi with points P3 to P6 set at an interval of 90 degrees on the cutting line CArl as the cutting start points, and with points P3i to P6i where the dividing lines DL3 to DL6 reach the virtual circle CRi as cutting end points. The dividing lines DL3 to DL6 are connected to the cutting line CArl. The dividing lines DL3 to DL6 are formed in any order.

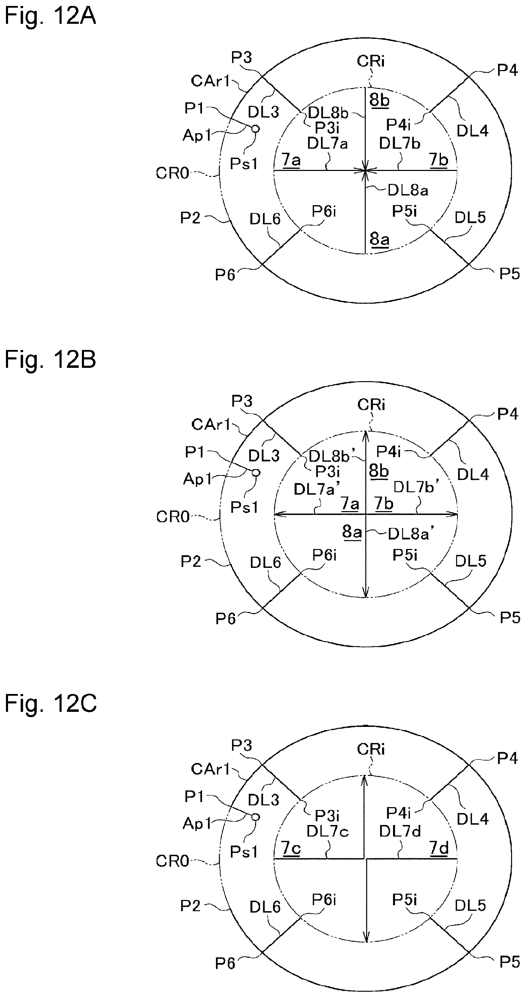

As illustrated in (c) of Figure 11A, as cutting steps 7 and 8, the laser processing machine 100 performs irradiation with a laser beam along a cross-shaped cutting path passing through the center of the virtual circle CRi in the virtual circle CRi to form dividing lines DL7, DL8 on the sheet metal W. As in a first modification illustrated in Figure 12A, as cutting steps 7a, 7b, 8a, and 8b, irradiation may be performed with a laser beam along each of four cutting paths extending from the virtual circle CRi toward the center thereof to form dividing lines DL7a, DL7b, DL8a, DL8b on the sheet metal W.

As in a second modification illustrated in Figure 12B, as cutting steps 7a, 7b, 8a, and 8b, irradiation may be performed with a laser beam along each of four cutting paths extending from the center of the virtual circle CRi toward the virtual circle CRi to form dividing lines DL7a', DL7b', DL8a', DL8b' on the sheet metal W. Further, as in a third modification illustrated in Figure 12C, two dividing lines DL7c, DL7d for dividing the virtual circle CRi into L-shapes may be formed as cutting steps 7c and 7d.

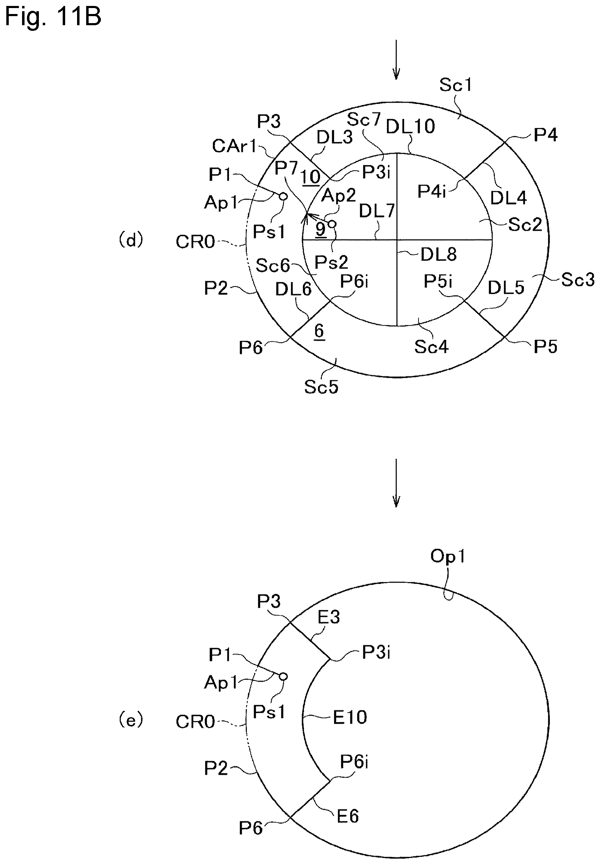

As illustrated in (d) of Figure 11B, the laser processing machine 100 forms a pierced hole Ps2 in the virtual circle CRi. Subsequently, as a cutting step 9, the laser processing machine 100 performs irradiation with a laser beam along a cutting path from the pierced hole Ps2 to a point P7 on the virtual circle CRi to form an approach Ap2 on the sheet metal W. The point P7 is at a different position from the points P3i to P6i. The approach Ap2 is formed in the normal direction of the virtual circle CRi at the point P7. Subsequently, as a cutting step 10, the laser processing machine 100 performs irradiation with a laser beam along a cutting path on, for example, a clockwise virtual circle CRi from the point P7 to form a circular dividing line DL10 on the sheet metal W.

Then, the areas surrounded by the dividing lines DL3 to DL6, DL10 and the cutting line CArl become scraps Sc1, Sc3, Sc5. The areas surrounded by the dividing lines DL7, DL8, DL10 become scraps Sc2, Sc4, Sc6, Sc7. The scraps Sc1 to Sc7 are formed in this order. When the scraps Sc1 to Sc7 fall, an opening Op1 is formed as illustrated in (e) of Figure 11B. At this time, the positions of the dividing lines DL3, DL6 become ends E3, E6 of the opening Op1, respectively. A circular-arc shaped portion of the dividing line DL10 between the point P3i and the point P6i becomes an end E10 of the opening Op1.

The cutting steps 3 to 10 are steps of forming, in the circle CR0, a plurality of dividing lines that include dividing lines with a plurality of angular positions on the cutting line CArl as cutting start points to divide the area in the circle CR0 into a plurality of scraps.

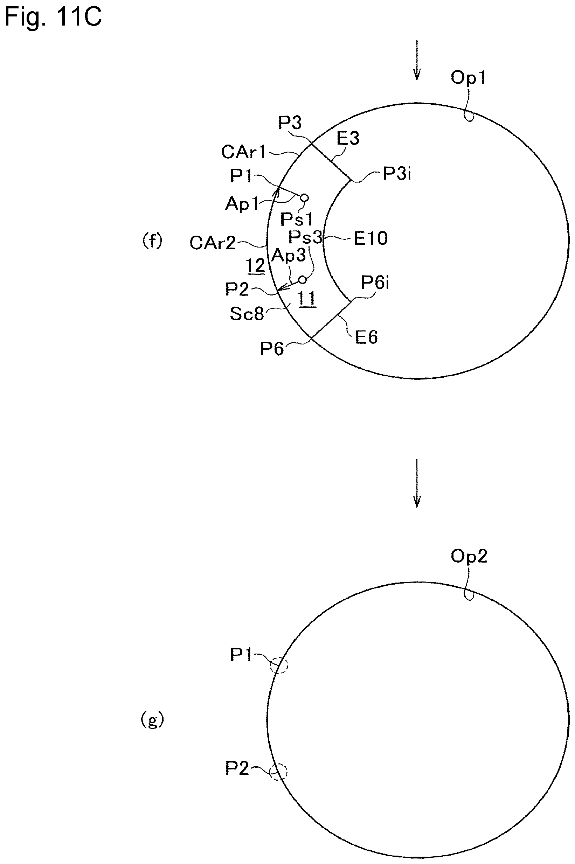

As illustrated in (f) of Figure 11C, the laser processing machine 100 forms a pierced hole Ps3 near the point P2. Subsequently, as a cutting step 11, the laser processing machine 100 performs irradiation with a laser beam along a cutting path from the pierced hole Ps3 to the point P2 to form an approach Ap3 on the sheet metal W. The approach Ap3 is formed in the normal direction of the circle CR0 at the point P2. Subsequently, as a cutting step 12, the laser processing machine 100 performs irradiation with a laser beam along a cutting path on the circle CR0 being a minor arc from the point P2 to the point P1 to form a circular-arc shaped cutting line CAr2 on the sheet metal W. Then, the area surrounded by the ends E3, E10, E6 and the cutting lines CArl, CAr2 becomes a final scrap Sc8.

The uncut minor arc from the point P2 to the point P1 is a second circular arc, and the cutting path set on the second circular arc is a second cutting path. The cutting line CAr2 is a second cutting line.

When the scrap Sc8 falls, as illustrated in (g) of Figure 11C, the openings of the area surrounded by the ends E3, E10, E6 and the cutting lines CArl, CAr2 is added to the opening Op1 to form a circular opening Op2. Dividing marks are formed at the points P1, P2 as surrounded by dotted circles.

It is assumed that the skid 13 is located at the center of the circle CR0 as illustrated in Figure 10 when the sheet metal W is cut as illustrated in (a) of Figure 11A to (f) of Figure 11C. Before the cutting of the sheet metal W is started, the area of the circle CR0 is supported by the skid 13. As the cutting of the sheet metal W progresses, a portion of the area of the circle CR0 away from the skid 13 in the X direction tends to deflect downward. The area of the minor arc between the point P1 and the point P2 connected to the sheet metal W until immediately before the final step of forming the round hole of the circle CR0 in the sheet metal W is provided so that the straight line connecting the point P1 and the point P2 is parallel to the skid 13. Therefore, the area of the minor arc is less likely to deflect downward until the final step, resulting in almost no processing defects regardless of the thickness of the sheet metal W.

When the straight line connecting the point P1 and the point P2 is orthogonal to the skid 13, and the area of the minor arc is provided so as to be located on the skid 13, a portion of the circle CR0 away from the skid 13 in the X direction may deflect downward. When the thickness of the sheet metal W is small, the area of the circle CR0 deflects downward, which tends to cause processing defects.

As described above, the laser processing machine 100 cuts the sheet metal W based on the processing program for cutting the sheet metal W, for example, in the cutting steps 1 to 12, created by the CAM device 2, to form a round hole with the opening Op2 in the sheet metal W. According to the laser processing method (round hole forming method) executed by the laser processing machine 100, dividing marks are formed only at the points P1, P2 as surrounded by dotted circles in (g) of Figure 11C. There is no dividing mark in the angle range exceeding 180 degrees (preferably 270 degrees) of the round hole, and the processing quality is good.

### <Round hole (diameter of 80 mm to 100 mm)>

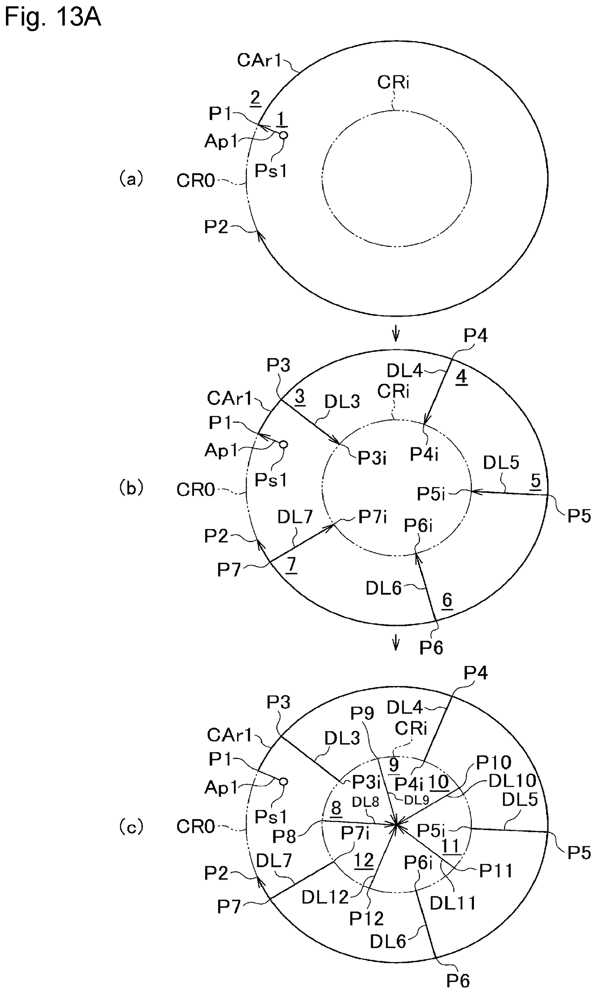

When the round hole has a diameter equal to or larger than 80 mm and smaller than 100 mm, which is a medium diameter, the CAM device 2 creates a processing program for cutting the sheet metal W in cutting steps illustrated in Figures 13A to 13C. The laser processing machine 100 cuts the sheet metal W in the cutting steps illustrated in Figures 13A to 13C based on the processing program. In Figures 13A to 13C, the description of the cutting step common to the cutting steps illustrated in Figures 11A to 11C may be omitted or simplified.

As illustrated in (a) of Figure 13A, as a cutting step 1, the laser processing machine 100 forms an approach Ap1, and as a cutting step 2, the laser processing machine 100 performs irradiation with a laser beam along a circular-arc shaped cutting path being a major arc from a point P1 to a point P2 to form a circular-arc shaped cutting line CArl on the sheet metal W. The circular-arc shaped cutting line CArl from the point P1 to the point P2 has an angle greater than 180 and preferably has an angle greater than 288 degrees. Note that this angle varies depending on the number of dividing lines to be described later. The major arc from the point P1 to the point P2 is a first circular arc, and the cutting path set on the first circular arc is a first cutting path. The cutting line CArl is a first cutting line.

As in the case of the round hole with a diameter of less than 80 mm, the positions of the point P1 and the point P2 are set so that the straight line connecting the point P1 and the point P2 is parallel to the skid 13.

As illustrated in (b) of Figure 13A, as cutting steps 3 to 7, the laser processing machine 100 performs irradiation with a laser beam along each of five cutting paths arranged at equal angular intervals in the area between the cutting line CArl and the virtual circle CRi to form dividing lines DL3 to DL7 on the sheet metal W. With the round hole having a diameter of 80 mm or more and less than 100 mm, the number of dividing lines at equal angular intervals is one more than that in the case of forming the round hole having a diameter of less than 80 mm. The number of dividing lines for cutting the area between the cutting line CArl and the virtual circle CRi is not limited to five but may be another number. The dividing lines DL3 to DL7 extend toward the center of the virtual circle CRi with points P3 to P7 set at an interval of 72 degrees on the cutting line CArl as the cutting start points, and with points P3i to P7i where the dividing lines DL3 to DL7 reach the virtual circle CRi as cutting end points. The dividing lines DL3 to DL7 are formed in any order.

As illustrated in (c) of Figure 13A, as cutting steps 8 to 12, the laser processing machine 100 performs irradiation with a laser beam along each of five cutting paths with the points P8 to P12 on the virtual circle CRi as the cutting start points and the center of the virtual circle CRi as the cutting end points, thereby forming dividing lines DL8 to DL12 on the sheet metal W. The points P8 to P12 are at different positions from points P3i to P7i. Therefore, when the dividing lines DL8 to DL12 are formed, the area in the circle CR0 hardly deflects downward.

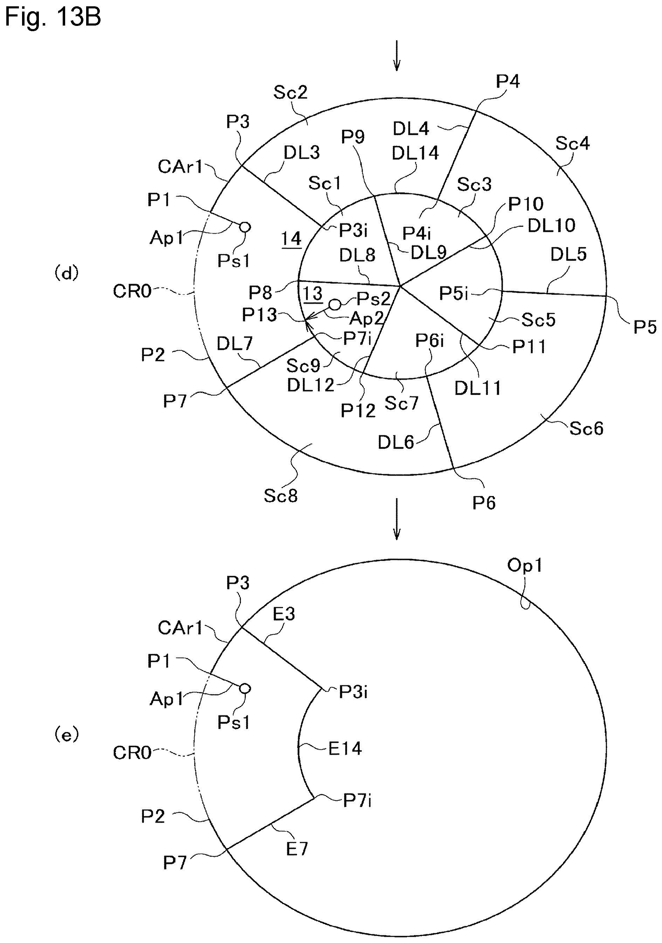

As illustrated in (d) of Figure 13B, the laser processing machine 100 forms a pierced hole Ps2 in the virtual circle CRi. Subsequently, as a cutting step 13, the laser processing machine 100 performs irradiation with a laser beam along a cutting path from the pierced hole Ps2 to a point P13 on the virtual circle CRi to form an approach Ap2 on the sheet metal W. The point P13 is at a different position from points P3i to P7i. The approach Ap2 is formed in the normal direction of the virtual circle CRi at the point P13. Subsequently, as a cutting step 14, the laser processing machine 100 performs irradiation with a laser beam along a cutting path on, for example, a clockwise virtual circle CRi from the point P13 to form a circular dividing line DL14 on the sheet metal W.

Then, the areas corresponding to the virtual circle CRi surrounded by the dividing line DL14 become scraps Sc1, Sc3, Sc5, Sc7, Sc9. The areas surrounded by the dividing lines DL3 to DL7, DL14 and the cutting line CArl become scraps Sc2, Sc4, Sc6, Sc8. The scraps Sc1 to Sc9 are formed in this order. When the scraps Sc1 to Sc9 fall, an opening Op1 is formed as illustrated in (e) of Figure 13B. At this time, the positions of the dividing lines DL3, DL7 become ends E3, E7 of the opening Op1, respectively. A circular-arc shaped portion of the dividing line DL14 between the point P3i and the point P7i becomes an end E14 of the opening Op1.

The cutting steps 3 to 14 are steps of forming, in the circle CR0, a plurality of dividing lines that include dividing lines with a plurality of angular positions on the cutting line CArl as the cutting start points to divide the area in the circle CR0 into a plurality of scraps.

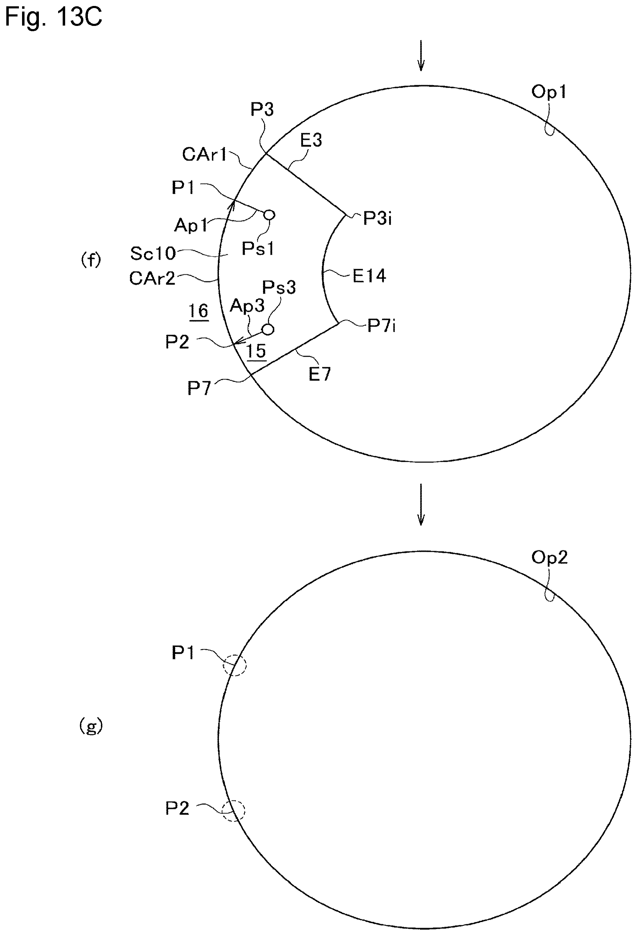

As illustrated in (f) of Figure 13C, the laser processing machine 100 forms a pierced hole Ps3 near the point P2. Subsequently, as a cutting step 15, the laser processing machine 100 performs irradiation with a laser beam along a cutting path from the pierced hole Ps3 to the point P2 to form an approach Ap3 on the sheet metal W. The approach Ap3 is formed in the normal direction of the circle CR0 at the point P2. Subsequently, as a cutting step 16, the laser processing machine 100 performs irradiation with a laser beam along a cutting path on the circle CR0 being a minor arc from the point P2 to the point P1 to form a circular-arc shaped cutting line CAr2 on the sheet metal W. Then, the area surrounded by the ends E3, E14, E7 and the cutting lines CArl, CAr2 becomes a final scrap Sc10.

The uncut minor arc from the point P2 to the point P1 is a second circular arc, and the cutting path set on the second circular arc is a second cutting path. The cutting line CAr2 is a second cutting line.

When the scrap Sc10 falls, a circular opening Op2 is formed as illustrated in (g) of Figure 13C. Dividing marks are formed at the points P1, P2 as surrounded by dotted circles.

As described above, the laser processing machine 100 cuts the sheet metal W based on the processing program for cutting the sheet metal W, for example, in the cutting steps 1 to 16, created by the CAM device 2, to form a round hole with the opening Op2 in the sheet metal W. According to the laser processing method (round hole forming method) executed by the laser processing machine 100, dividing marks are formed only at the points P1, P2 as surrounded by dotted circles in (g) of Figure 13C. There is no dividing mark in the angle range exceeding 180 degrees (preferably 288 degrees) of the round hole, and the processing quality is good.

### <Round hole (diameter of 100 mm or more)>

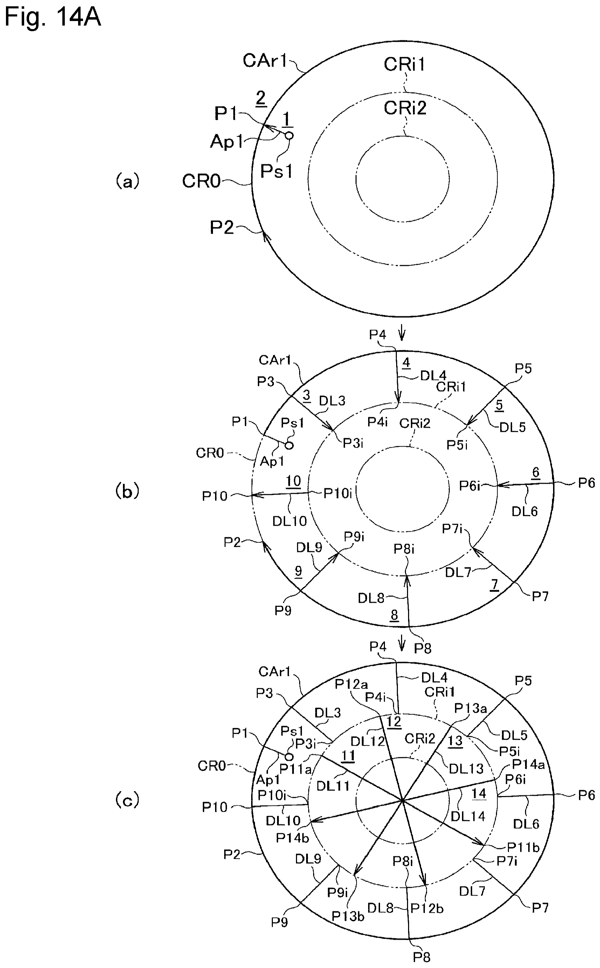

When the diameter of the round hole is equal to or larger than 100 mm, which is a relatively large diameter, the CAM device 2 creates a processing program for cutting the sheet metal W in cutting steps illustrated in Figures 14A to 14C. The laser processing machine 100 cuts the sheet metal W in the cutting steps illustrated in Figures 14A to 14C based on the processing program. In Figures 14A to 14C, the description of the cutting step common to the cutting steps illustrated in Figures 11A to 11C may be omitted or simplified.

As illustrated in (a) of Figure 14A, the CAM device 2 sets a virtual circle CRi1 concentric with the circle CR0 and having a smaller diameter than the circle CR0, and a virtual circle CRi2 having a smaller diameter than the virtual circle CRi1. As a cutting step 1, the laser processing machine 100 performs irradiation with a laser beam along a circular-arc shaped cutting path, which is a major arc from a point P1 to a point P2 as a cutting step 2, thereby forming an approach Ap1 and forms a circular-arc shaped cutting line CArl on the sheet metal W.

The circular-arc shaped cutting line CArl from the point P1 to the point P2 has an angle greater than 180 and preferably has an angle greater than 270 degrees. The major arc from the point P1 to the point P2 is a first circular arc, and the cutting path set on the first circular arc is a first cutting path. The cutting line CArl is a first cutting line.

Similarly, the positions of the point P1 and the point P2 are set so that the straight line connecting the point P1 and the point P2 is parallel to the skid 13.

As illustrated in (b) of Figure 14A, as cutting steps 3 to 10, the laser processing machine 100 performs irradiation with a laser beam along each of eight cutting paths arranged at equal angular intervals in the area between the cutting line CArl and the virtual circle CRi1 to form dividing lines DL3 to DL10 on the sheet metal W. With the round hole having a diameter of 100 mm or more, the number of dividing lines at equal angular intervals is three more than that in the case of forming the round hole having a diameter of 80 mm or more and less than 100 mm. The number of dividing lines is not limited to three more than in the above case.

The dividing lines DL3 to DL10 are formed at equal intervals. The dividing lines DL3 to DL9 among the dividing lines DL3 to DL10 extend toward the center of the virtual circle CRi1 with points P3 to P9 set on the cutting line CArl as the cutting start points, and with points P3i to P9i where the dividing lines DL3 to DL9 reach the virtual circle CRi1 as the cutting end points. On the other hand, only the dividing line DL10 among the dividing lines DL3 to DL10 extends toward the circle CR0 side with a point P10i on the virtual circle CRi1 as the cutting start point, and with a point P10 where the dividing line DL10 reaches the circle CR0 as the cutting end point. The dividing line DL10 reaches the center of the virtual circle CRi1 when extended from the point P10i to the inside of the virtual circle CRi1.

Only the dividing line DL10 is preferably formed so as to extend from the virtual circle CRi1 side toward the circle CR0 side because the portion of the circular arc between the point P1 and the point P2 is uncut. The dividing lines DL3 to DL10 are formed in any order.

As illustrated in (c) of Figure 14A, as cutting steps 11 to 14, the laser processing machine 100 performs irradiation with a laser beam along a cutting path for dividing the inside of the virtual circle CRi1 into eight portions, thereby forming dividing lines DL11 to DL14 on the sheet metal W. The number of dividings of the area in the virtual circle CRi1 is not limited to eight. The dividing lines DL11 to DL14 start at the points P11a, P12a, P13a, P14a on the virtual circle CRi1 as the cutting start points, pass through the center of the virtual circle CRi2, and end at the points P11b, P12b, P13b, P14b on the virtual circle CRi1 as the cutting end points. When the dividing lines DL11 to DL14 are formed, the area in the circle CR0 hardly deflects downward because the points P3i to P10i and the points P11a to P14a, P11b to P14b are made different from each other.

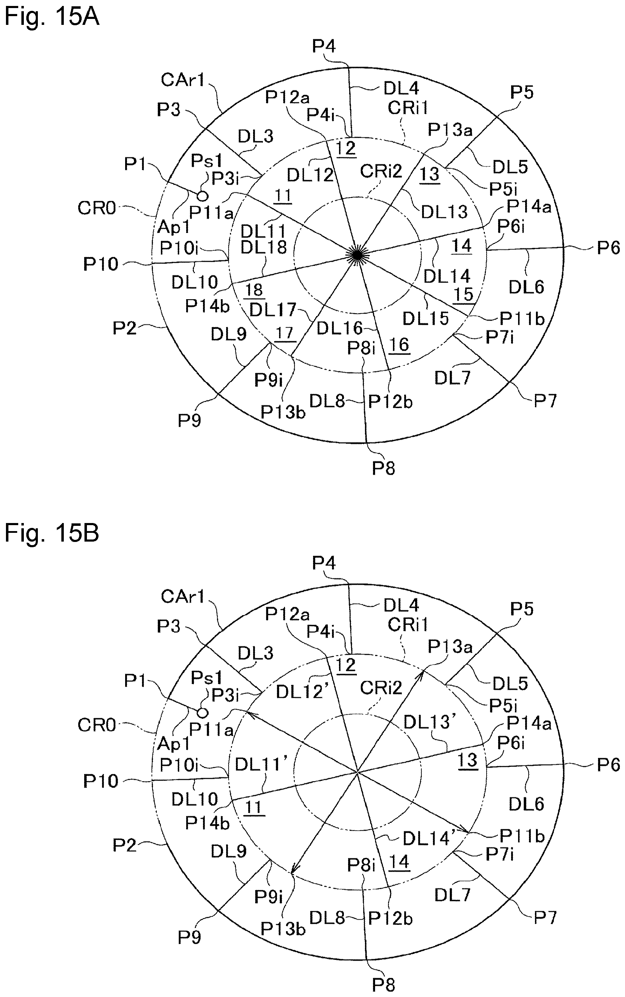

As in a first modification illustrated in Figure 15A, irradiation may be performed with a laser beam along each of eight cutting paths extending toward the center of the virtual circle CRi2 in the virtual circle CRi1 to form dividing lines DL11 to DL18 on the sheet metal W. The number of dividings of the area in the virtual circle CRi1 is not limited to eight, and the cutting paths are not limited to the cutting paths illustrated in Figure 15A. As in a second modification illustrated in Figure 15B, as cutting steps 11 to 14, four dividing lines DL11' to DL14' for dividing the area in the virtual circle CRi into V-shapes may be formed.

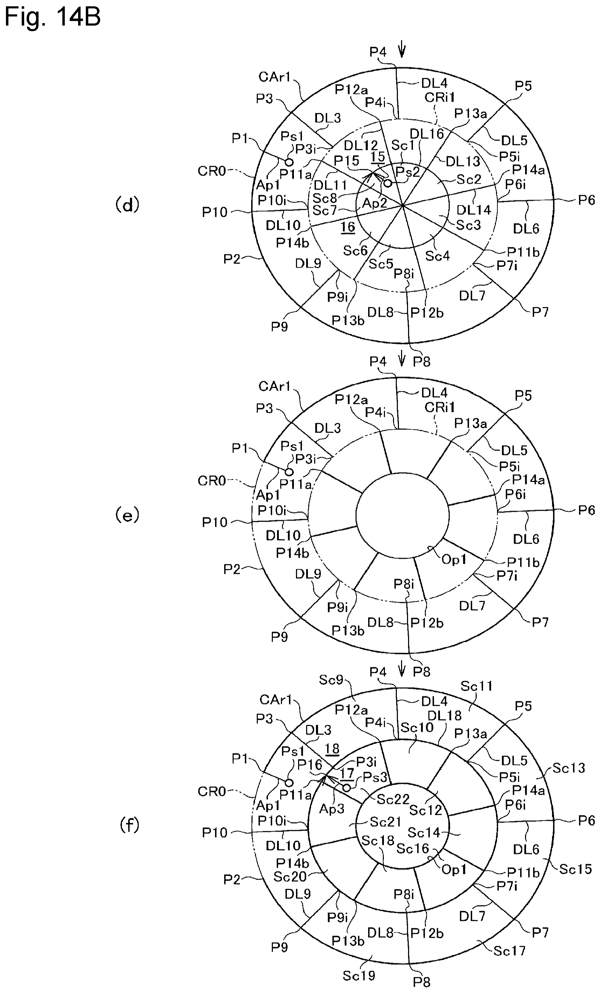

As illustrated in (d) of Figure 14B, the laser processing machine 100 forms a pierced hole Ps2 in the virtual circle CRi2. Subsequently, as a cutting step 15, the laser processing machine 100 performs irradiation with a laser beam along a cutting path from the pierced hole Ps2 to a point P15 on the virtual circle CRi2 to form an approach Ap2 on the sheet metal W. The approach Ap2 is formed in the normal direction of the virtual circle CRi2 at the point P15. The approach Ap2 is formed at a position away from the dividing lines DL11 to DL14. Subsequently, as a cutting step 16, the laser processing machine 100 performs irradiation with a laser beam along a cutting path on a virtual circle CRi2 from the point P15 clockwise, for example, to form a circular dividing line DL16 on the sheet metal W.

Then, the areas corresponding to the virtual circle CRi2 surrounded by the dividing line DL16 become scraps Sc1 to Sc8. When the scraps Sc1 to Sc8 fall, as illustrated in (e) of Figure 14B, an opening Op1 is formed at the position of the virtual circle CRi2.

As illustrated in (f) of Figure 14B, the laser processing machine 100 forms a pierced hole Ps3 in the virtual circle CRi1. Subsequently, as a cutting step 17, the laser processing machine 100 performs irradiation with a laser beam along a cutting path from the pierced hole Ps3 to the point P16 on the virtual circle CRi1 to form an approach Ap3 on the sheet metal W. The approach Ap3 is formed in the normal direction of the virtual circle CRi1 at the point P16. The point P16 is at a different position from points P3i to P10i. Subsequently, as a cutting step 18, the laser processing machine 100 performs irradiation with a laser beam from the point P16 along the cutting path on the virtual circle CRi1 clockwise, for example, to form a circular dividing line DL18 on the sheet metal W.

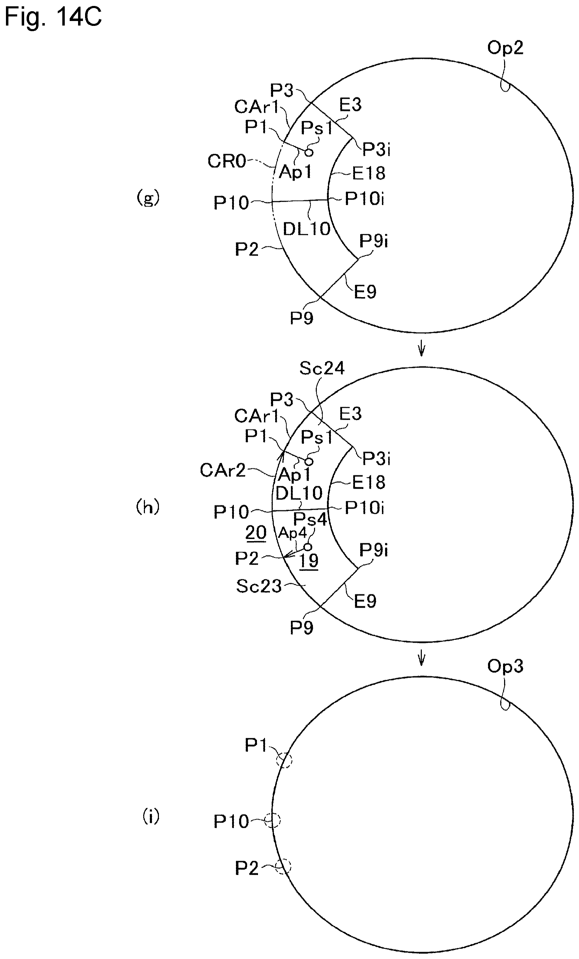

Then, the areas surrounded by the dividing line DL18 and the areas surrounded by the dividing lines DL3 to DL9, DL18, and the cutting line CArl become scraps Sc9 to Sc22. The scraps Sc9 to Sc22 are formed in this order. When the scraps Sc9 to Sc22 fall, an opening Op2 is formed as illustrated in (g) of Figure 14C. At this time, the positions of the dividing lines DL3, DL9 become ends E3, E9 of the opening Op2, respectively. A circular-arc shaped portion of the dividing line DL18 between the point P3i and the point P9i becomes an end E18 of the opening Op2.

The cutting steps 3 to 18 are steps of forming, in the circle CR0, a plurality of dividing lines that include dividing lines with a plurality of angular positions on the cutting line CArl as the cutting start points to divide the area in the circle CR0 into a plurality of scraps.

As illustrated in (h) of Figure 14C, the laser processing machine 100 forms a pierced hole Ps4 near the point P2. Subsequently, as a cutting step 19, the laser processing machine 100 performs irradiation with a laser beam along a cutting path from the pierced hole Ps4 to the point P2 to form an approach Ap4 on the sheet metal **W.** The approach Ap4 is formed in the normal direction of the circle CR0 at the point P2. Subsequently, as a cutting step 20, the laser processing machine 100 performs irradiation with a laser beam along a cutting path on the circle CR0 being a minor arc from the point P2 to the point P1 to form a circular-arc shaped cutting line CAr2 on the sheet metal W. Then, the areas surrounded by the ends E3, E18, E9 and the cutting lines CArl, CAr2 become final scraps Sc23, Sc24.

The uncut minor arc from the point P2 to the point P1 is a second circular arc, and the cutting path set on the second circular arc is a second cutting path. The cutting line CAr2 is a second cutting line.

When the scraps Sc23, Sc24 fall, a circular opening Op3 is formed as illustrated in (i) of Figure 14C. As surrounded by dotted circles, dividing marks are formed at the points P1, P2, P10.

As described above, the laser processing machine 100 cuts the sheet metal W based on the processing program for cutting the sheet metal W, for example, in the cutting steps 1 to 20, created by the CAM device 2, to form a round hole with the opening Op3 in the sheet metal W. According to the laser processing method (round hole forming method) executed by the laser processing machine 100, dividing marks are formed only at the points P1, P2, P10 as surrounded by dotted circles in (i) of Figure 14C. There is no dividing mark in the angle range exceeding 180 degrees (preferably 270 degrees) of the round hole, and the processing quality is good.

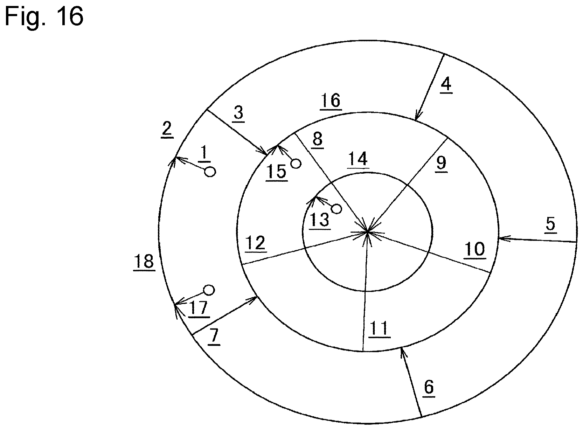

Even in the case of forming the round hole with a diameter of 100 mm or more in the sheet metal W, when it is not necessary to make each scrap as small as in the laser processing method illustrated in Figures 14A to 14C, the circle CR0 may be divided as illustrated in Figure 16. According to the laser processing method illustrated in Figure 16, the laser processing machine 100 cuts the sheet metal W by cutting steps 1 to 18. In the laser processing method illustrated in Figure 16, the cutting steps 3 to 16 are steps of forming, in the circle CR0, a plurality of dividing lines that include dividing lines with a plurality of angular positions on the cutting line CArl as the cutting start points to divide the area in the circle CR0 into a plurality of scraps.

According to the laser processing method illustrated in Figure 16, dividing marks are formed only in two locations having an angle less than 72 degrees, there is no dividing mark in the angle range exceeding 288 degrees of the round hole, and the processing quality is good.

### <Square hole>

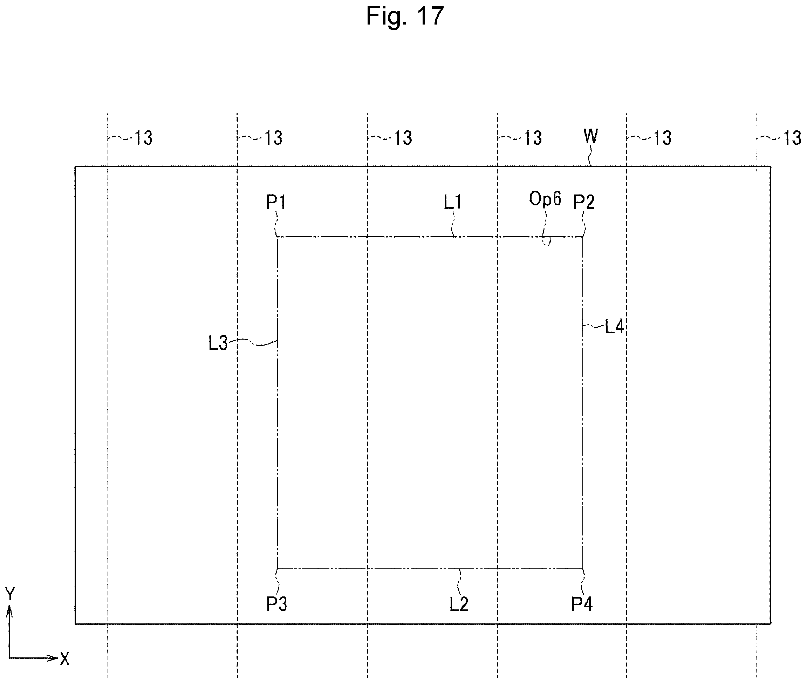

Figure 17 illustrates a square hole formed in a part. The outline of the part is not illustrated also in Figure 17. The square hole is a square surrounded by a straight line L1 connecting points P1, P2, a straight line L2 connecting points P3, P4, a straight line L3 connecting the points P1, P3, and a straight line L4 connecting the points P2, P4. The straight lines L1, L2 are orthogonal to the skid 13. In the case of forming a square hole with a side of more than 80 mm, which will be described later, the laser processing machine 100 cuts the sheet metal W at a position indicated by a dashed double-dotted line to form a square hole with an opening Op6.

Depending on the length of one side of the square hole, a portion to be cut as the square hole (a hole formation area) may be located on one skid 13, may be located on two skids 13 as illustrated in Figure 17, or may be located on three or more skids 13.

### <Square hole (one side of 40 mm or less)>

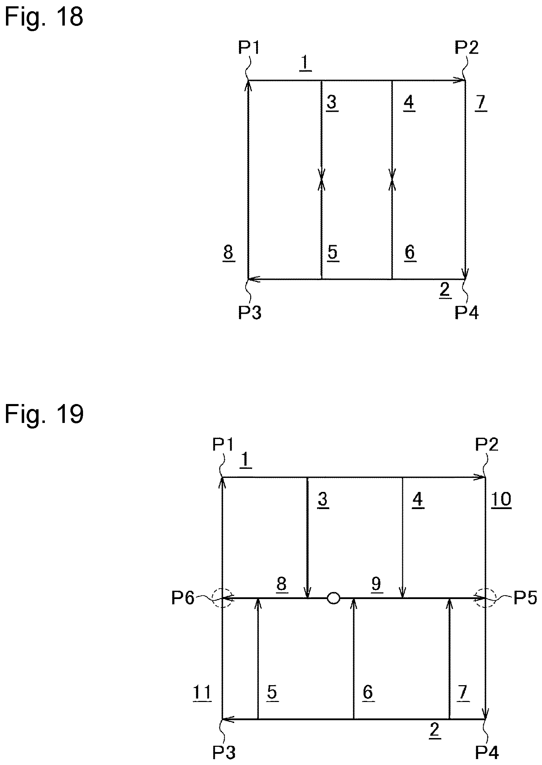

In the case of forming a square hole with a side of 40 mm or less, the laser processing machine 100 employs a laser processing method similar to the laser processing method for the rectangular hole with a width of 40 mm or less illustrated in Figures 7A and 7B. As illustrated in Figure 18, the laser processing machine 100 cuts the sheet metal W by cutting steps 1 to 8, for example.

### <Square hole (one side of more than 40 mm and 80 mm or less)>

In the case of forming a square hole with a side of more than 40 mm and 80 mm or less, the laser processing machine 100 employs a laser processing method similar to the laser processing method for the rectangular hole with a width of more than 40 mm illustrated in Figures 9A to 9C. As illustrated in Figure 19, the laser processing machine 100 cuts the sheet metal W by cutting steps 1 to 11, for example. According to the laser processing method (square hole forming method) executed by the laser processing machine 100, dividing marks are formed only at the points P5, P6 as surrounded by dotted circles in Figure 19.

### <Square hole (one side of more than 80 mm)>

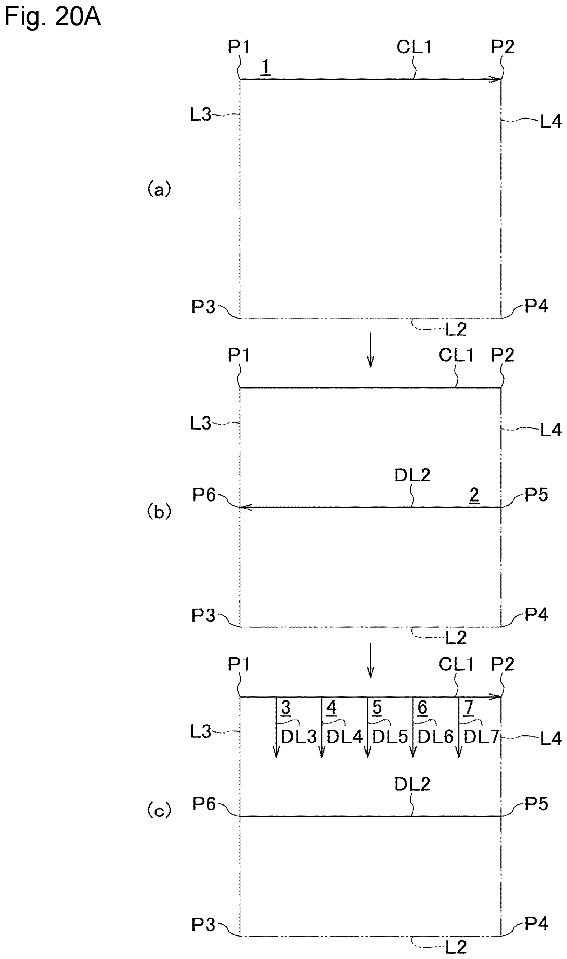

When one side of the square hole exceeds 80 mm, the CAM device 2 creates a processing program for cutting the sheet metal W in cutting steps illustrated in Figures 20A to 20G. The laser processing machine 100 cuts the sheet metal W in the cutting steps illustrated in Figures 20A to 20G based on the processing program.

As illustrated in (a) of Figure 20A, as a cutting step 1, the laser processing machine 100 performs irradiation with a laser beam along a cutting path set on a straight line L1 from a point P1 to a point P2 to form a cutting line CL1 on the sheet metal **W.** As illustrated in (b) of Figure 20A, as a cutting step 2, the laser processing machine 100 performs irradiation with a laser beam along a cutting path set on a straight line from a point P5 to a point P6 to form a dividing line DL2 on the sheet metal W. The points P5, P6 are located in the middles of straight lines L4, L3, respectively. The cutting step 1 and the cutting step 2 may be reversed. The cutting direction at the time of forming the cutting line CL1 and the dividing line DL2 may be reversed. The laser processing machine 100 uses one cutting path to continuously cut the straight line L1 of the square hole by without breaking up the cutting in the middle.

As illustrated in (c) of Figure 20A, as cutting steps 3 to 7, the laser processing machine 100 performs irradiation with a laser beam along each of cutting paths set so as to cut in a direction orthogonal to the cutting line CL1 to the center of the distance from the cutting line CL1 to the dividing line DL2, with the cutting line CL1 as the cutting start points, thereby forming dividing lines DL3 to DL7 on the sheet metal W. Here, the number of dividing lines in the direction orthogonal to the cutting line CL1 is five, but the number of dividing lines is set in accordance with the length of one side of the square hole. The dividing lines DL3 to DL7 are formed in any order. The cutting end points of the dividing lines DL3 to DL7 only have to be located at the intermediate positions between the cutting line CL1 and the dividing line DL2.

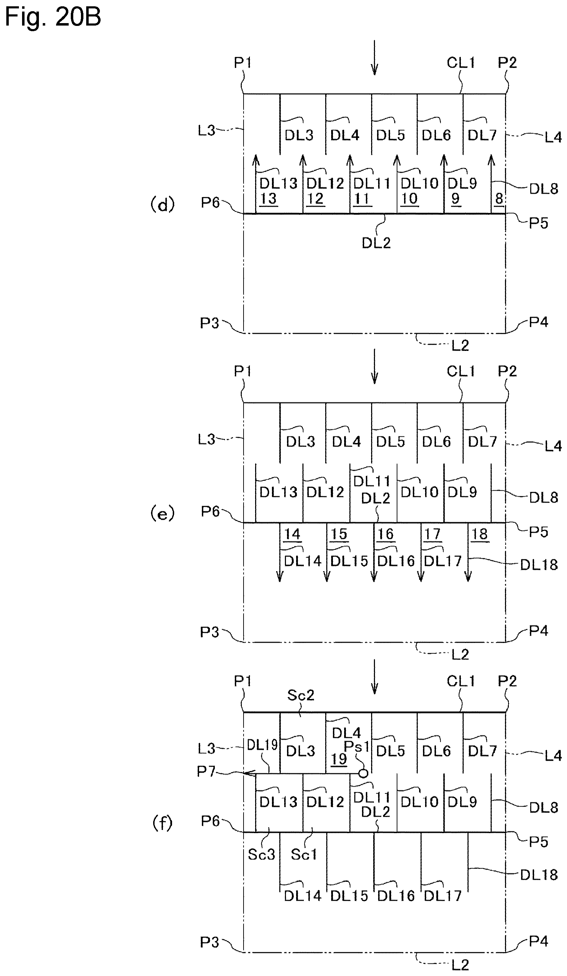

As illustrated in (d) of Figure 20B, as cutting steps 8 to 13, the laser processing machine 100 performs irradiation with a laser beam along each of cutting paths set so as to be cut in a direction orthogonal to the dividing line DL2 to the center of the distance from the cutting line CL1 to the dividing line DL2, with the dividing line DL2 as the cutting start points, thereby forming dividing lines DL8 to DL13 on the sheet metal W. Here, the number of dividing lines in the direction orthogonal to the dividing line DL2 is six, which is one more than the number of dividing lines DL3 to DL7 in the direction orthogonal to the cutting line CL1. The number of dividing lines in the direction orthogonal to the dividing line DL2 is not limited to one more than the number of dividing lines in the direction orthogonal to the cutting line CL1, but may be the same, one more or one less, or two more or two less. The dividing lines DL8 to DL13 are formed in any order.

At this time, the positions of the dividing lines DL3 to DL7 and the dividing lines DL8 to DL13 in the X direction are shifted, and the end points of the dividing lines DL8 to DL13 do not coincide with the end points of the dividing lines DL3 to DL7. That is, the dividing lines DL3 to DL7 and the dividing lines DL8 to DL13 are alternately arranged in the X direction. Due to the alternate arrangement of the dividing lines DL3 to DL7 and the dividing lines DL8 to DL13, even when a plurality of dividing lines are formed between the cutting line CL1 and the dividing line DL2, the area between the cutting line CL1 and the dividing line DL2 hardly deflects downward.

As illustrated in (e) of Figure 20B, as cutting steps 14 to 18, the laser processing machine 100 performs irradiation with a laser beam along each of cutting paths set so as to be cut in the direction orthogonal to the dividing line DL2 to the center of the distance from the dividing line DL2 to the straight line L2, with the dividing line DL2 as the cutting start points, thereby forming dividing lines DL14 to DL18 on the sheet metal **W.** The number of dividing lines is five corresponding to the dividing lines DL3 to DL7. The positions of the dividing lines DL14 to DL18 in the X direction are the same as the positions of the dividing lines DL3 to DL7 in the X direction. The cutting end points of the dividing lines DL14 to DL18 only have to be located at the intermediate positions between the dividing line DL2 and the straight line L2.

As illustrated in (f) of Figure 20B, the laser processing machine 100 forms a pierced hole Ps1 at a position located at the center of the distance from the cutting line CL1 to the dividing line DL2 and not coinciding with the end points of the dividing lines DL3 to DL13. The pierced hole Ps1 is preferably formed at a position near the center of the length of the cutting line CL1 and the dividing line DL2. In this example, the pierced hole Ps1 is formed between the end point of the dividing line DL11 and the end point of the dividing line DL5.

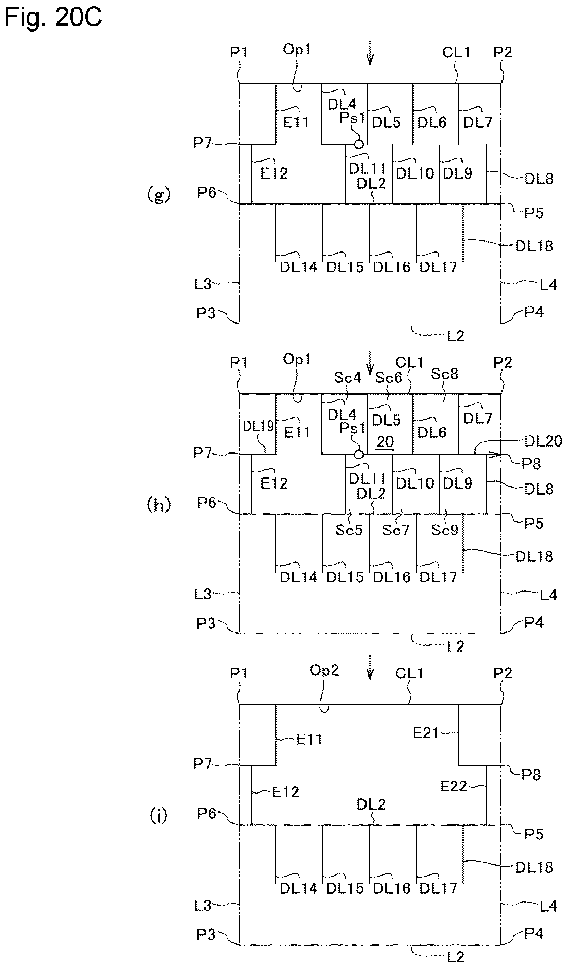

Following the formation of the pierced hole Ps1, as a cutting step 19, the laser processing machine 100 performs irradiation with a laser beam along a cutting path set on a straight line parallel to the cutting line CL1 and the dividing line DL2 from the pierced hole Ps1 to a point P7, which is the same as the points P1, P6 in the X direction, thereby forming a dividing line DL19 on the sheet metal W. When the dividing line DL19 is formed, the areas between the dividing line DL11 and the dividing line DL12, between the dividing line DL4 and the dividing line DL3, and between the dividing line DL12 and the dividing line DL13 become scraps Sc1 to Sc3, respectively. The scraps Sc1 to Sc3 are formed in this order. As illustrated in (g) of Figure 20C, an opening Op1 is formed when the scraps Sc1 to Sc3 fall. The positions of the dividing lines DL3, DL13 become ends E11, E12 of the opening Op1, respectively.

As illustrated in (h) of Figure 20C, as a cutting step 20, the laser processing machine 100 performs irradiation with a laser beam along a cutting path set on a straight line parallel to the cutting line CL1 and the dividing line DL2 from the pierced hole Ps1 to a point P8, which is the same as the points P2, P5 in the X direction, thereby forming a dividing line DL20 on the sheet metal **W.** When the dividing line DL20 is formed, the areas between the dividing line DL4 and the dividing line DL5, between the dividing line DL11 and the dividing line DL10, between the dividing line DL5 and the dividing line DL6, between the dividing line DL10 and the dividing line DL9, between the dividing line DL6 and the dividing line DL7, and between the dividing line DL9 and the dividing line DL8 become scraps Sc4 to Sc9, respectively. The scraps Sc4 to Sc9 are formed in this order.

As illustrated in (i) of Figure 20C, when the scraps Sc4 to Sc9 fall, an opening Op2 is formed. The positions of the dividing lines DL7, DL8 become ends E21, E22 of the opening Op2, respectively.

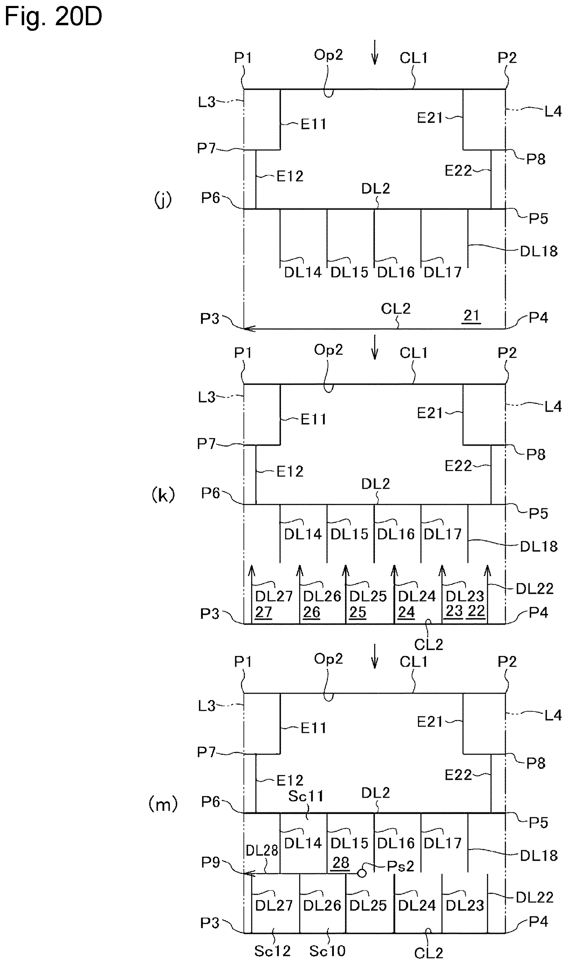

As illustrated in (j) of Figure 20D, as a cutting step 21, the laser processing machine 100 performs irradiation with a laser beam along a cutting path set on the straight line L2 from the point P4 to the point P3 to form a cutting line CL2 on the sheet metal W. The cutting direction at the time of forming the cutting line CL2 may be reversed. The laser processing machine 100 uses one cutting path to continuously cut the straight line L2 of the square hole without breaking up the cutting in the middle.

As illustrated in (k) of Figure 20D, as cutting steps 22 to 27, the laser processing machine 100 performs irradiation with a laser beam along each of cutting paths set so as to be cut in the direction orthogonal to the cutting line CL2 to the center of the distance from the cutting line CL2 to the dividing line DL2, with the cutting line CL2 as the cutting start points, thereby forming dividing lines DL22 to DL27 on the sheet metal W. Here, the number of dividing lines is six, which is the same number as the dividing lines DL8 to DL13, corresponding to the dividing lines DL8 to DL13. The positions of the dividing lines DL22 to DL27 in the X direction are the same as the positions of the dividing lines DL8 to DL13 in the X direction. The dividing lines DL22 to DL27 are formed in any order.

As illustrated in (m) of Figure 20D, the laser processing machine 100 forms a pierced hole Ps2 at a position located at the center of the distance from the cutting line CL2 to the dividing line DL2 and not coinciding with the end points of the dividing lines DL14 to DL18, DL22 to DL27. The pierced hole Ps2 is preferably formed at a position near the center of the length of the cutting line CL2 and the dividing line DL2. In this example, the pierced hole Ps2 is formed between the end point of the dividing line DL25 and the end point of the dividing line DL16.

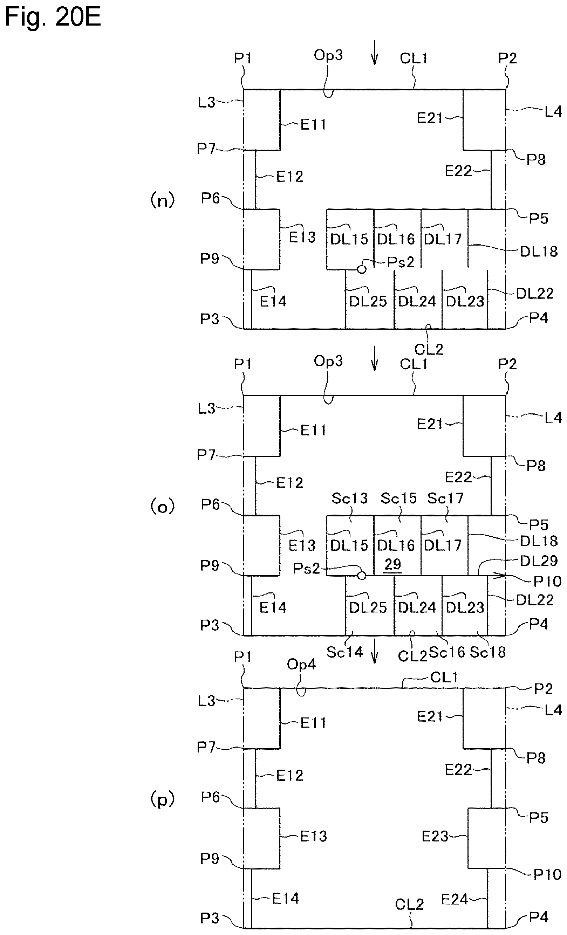

Following the formation of the pierced holes Ps2, as a cutting step 28, the laser processing machine 100 performs irradiation with a laser beam along a cutting path set on a straight line parallel to the cutting line CL2 and the dividing line DL2 from the pierced holes Ps2 to a point P9, which is the same as the points P3, P6 in the X direction, thereby forming a dividing line DL28 on the sheet metal W. When the dividing line DL28 is formed, the areas between the dividing line DL25 and the dividing line DL26, between the dividing line DL15 and the dividing line DL14, and between the dividing line DL26 and the dividing line DL27 become scraps Sc10 to Sc12, respectively. As illustrated in (n) of Figure 20E, when the scraps Sc10 to Sc12 fall, an opening Op3 is formed. The positions of the dividing lines DL14, DL27 become ends E13, E14 of the opening Op3, respectively.

As illustrated in (o) of Figure 20E, as a cutting step 29, the laser processing machine 100 performs irradiation with a laser beam along a cutting path set on a straight line parallel to the cutting line CL2 and the dividing line DL2 from the pierced hole Ps2 to a point P10, which is the same as the points P4, P5 in the X direction, thereby forming a dividing line DL29 on the sheet metal **W.** When the dividing line DL29 is formed, the areas between the dividing line DL15 and the dividing line DL16, between the dividing line DL25 and the dividing line DL24, between the dividing line DL16 and the dividing line DL17, between the dividing line DL24 and the dividing line DL23, between the dividing line DL17 and the dividing line DL18, and between the dividing line DL23 and the dividing line DL22 become scraps Sc13 to Sc18, respectively. The scraps Sc13 to Sc18 are formed in this order.

As illustrated in (p) of Figure 20E, an opening Op4 is formed when the scraps Sc13 to Sc18 fall. The positions of the dividing lines DL18, DL22 become ends E23, E24 of the opening Op4, respectively.

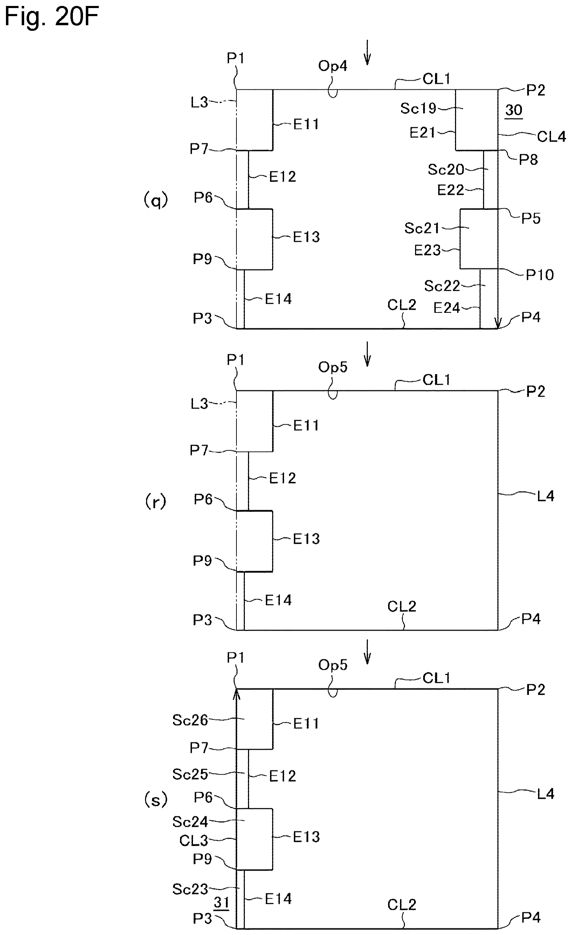

As illustrated in (q) of Figure 20F, in the cutting step 30, the laser processing machine 100 performs irradiation with a laser beam along a cutting path set on the straight line L4 from the point P2 to the point P4 to form a cutting line CL4 on the sheet metal W. The cutting step 30 of forming the cutting line CL4 may be a step of linearly cutting from the point P4 to the point P2 in a direction opposite to the direction illustrated in (q) of Figure 20F. Then, the areas between the ends E21 to E24 and the cutting line CL4 become scraps Sc19 to Sc22, respectively. The scraps Sc19 to Sc22 are formed in this order. When the scraps Sc19 to Sc22 fall, an opening Op5 is formed as illustrated in (r) of Figure 20F. The position of the cutting line CL4 becomes the straight line L4.

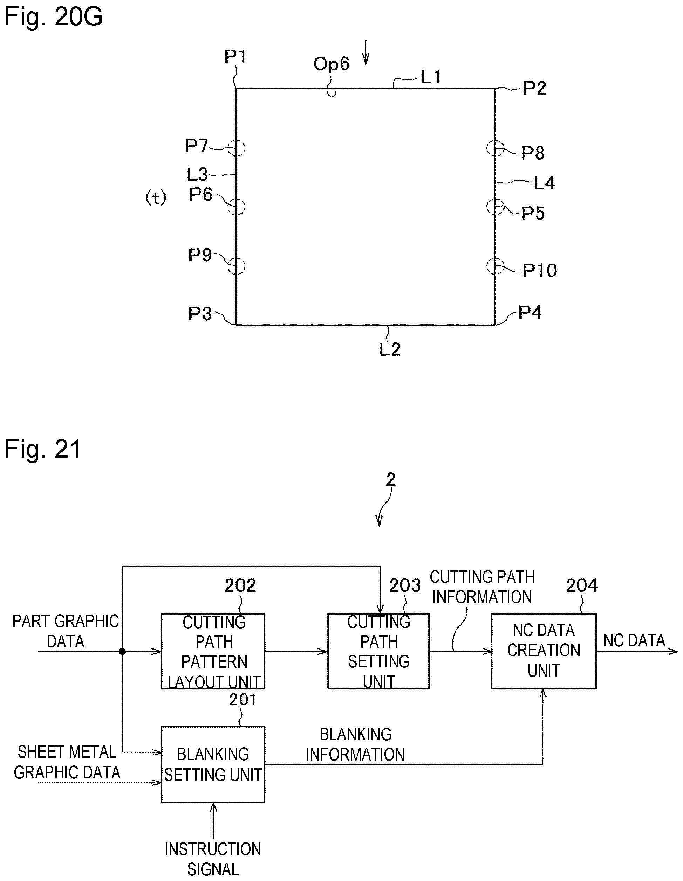

As illustrated in (s) of Figure 20F, as a cutting step 31, the laser processing machine 100 performs irradiation with a laser beam along a cutting path set on a straight line L3 from the point P3 to the point P1 to form a cutting line CL3 on the sheet metal W. The cutting step 31 of forming the cutting line CL3 may be a step of linearly cutting from the point P1 to the point P3 in a direction opposite to the direction illustrated in (s) of Figure 20F. Then, the areas between the ends E14 to E11 and the cutting line CL3 become scraps Sc23 to Sc26, respectively. The scraps Sc23 to Sc26 are formed in this order. When the scraps Sc23 to Sc26 fall, an opening Op6 is formed as illustrated in (t) of Figure 20G. The position of the cutting line CL3 becomes the straight line L3.

The order of the fall of the scraps Sc19 to Sc22 and the scraps Sc23 to Sc26 may be reversed.

As described above, the laser processing machine 100 cuts the sheet metal W based on the processing program for cutting the sheet metal W, for example, in the cutting steps 1 to 31, created by the CAM device 2, to form a square hole with the opening Op6 in the sheet metal W. According to the laser processing method (square hole forming method) illustrated in Figures 20A to 20G executed by the laser processing machine 100, dividing marks are formed only at the points P5 to P10 as surrounded by dotted circles in (t) of Figure 20G. There is no dividing mark on the straight lines L1, L2, which are two sides in the X direction, and the processing quality is good.

Figure 21 illustrates an example of a functional configuration of the CAM device 2 that generates a processing program for forming an elongated hole, a rectangular hole, a round hole, or a square hole in the sheet metal W described above. The CAM device 2 has a functional configuration as illustrated in Figure 21 by executing the software (computer program) of the CAM.

In Figure 21, a blanking setting unit 201 executes blanking based on the graphic data of a part to be produced (hereinafter referred to as part graphic data) and the graphic data of the sheet metal W (hereinafter referred to as sheet metal graphic data) to generate blanking information. The blanking setting unit 201 executes blanking so as to dispose the number of parts, indicated by an instruction signal instructed by operating an operation unit (not illustrated) in the graphic representing the sheet metal W. The part graphic data and the sheet metal graphic data may be supplied from the CAD device 1 to the CAM device 2 or may be read from the database 3 and supplied to the CAM device 2.

A cutting path pattern layout unit 202 lays out a cutting path pattern for cutting a part in the graphic representing the part in accordance with the shape and size of the part indicated by the part graphic data. When the part includes a hole inside, the cutting path pattern layout unit 202 lays out a cutting path pattern for performing cutting while dividing the hole formation area into a plurality of scraps. The cutting path pattern includes a plurality of cutting paths.

Based on the part graphic data and the cutting path pattern laid out by the cutting path pattern layout unit 202, a cutting path setting unit 203 sets a direction in which each cutting path is cut and the cutting order of the plurality of cutting paths, thereby generating cutting path information. Based on the blanking information and the cutting path information, an NC data creation unit 204 creates NC data for controlling the laser processing machine 100 so that the NC device 50 cuts the sheet metal W in the pattern laid out by the cutting path pattern layout unit 202 in the directions for cutting and the cutting order set by the cutting path setting unit 203. The NC data is a processing program formed using a machine control code for the NC device 50 to control the laser processing machine 100.

The cutting path pattern layout unit 202 and the cutting path setting unit 203 in the CAM device 2 set a cutting step of forming an elongated hole, a rectangular hole, a round hole, or a square hole by the hole forming methods as described above. The NC data creation unit 204 in the CAM device 2 creates a processing program for cutting the sheet metal W in the set cutting step. Therefore, when the NC device 50 controls the laser processing machine 100 (processing machine body 60) based on the processing program so as to cut the sheet metal W and produce a part with a hole, it is possible to form a hole with good processing quality and as few dividing marks as possible on the cut surface.

## Claims

1. A laser processing method comprising:
performing irradiation with a laser beam along a first cutting path set on a first circular arc exceeding 180 degrees from a first point (P1) to a second point (P2) on a circle indicating a round hole to be formed in a sheet metal (W) and continuously cutting the first cutting path to form a first cutting line (CAr1) having a circular-arc shape on the sheet metal (W);
forming, in the circle, a plurality of dividing lines that include dividing lines with a plurality of angular positions on the first cutting line (CAr1) as start points for cutting to divide an area in the circle into a plurality of scraps (Sc1-Sc7, Sc1-Sc9, Sc1-Sc22); and
performing irradiation with a laser beam along a second cutting path set on a second circular arc that is uncut and extends from the second point (P2) to the first point (P1) and cutting the second cutting path to form a second cutting line (CAr2) having a circular-arc shape on the sheet metal (W) so as to form a final scrap (Sc8, Sc10, Sc23, Sc24) for forming the round hole.

2. A laser processing machine (100) comprising:
a processing machine body (60) including a table (12) on which a plurality of skids (13) are arranged, the processing machine body (60) being configured to irradiate a sheet metal (W) mounted on the skids (13) with a laser beam and cut the sheet metal (W); and
a control device (50) configured to control the processing machine body (60) so that the processing machine body (60) cuts the sheet metal (W) to produce a part,
**characterized in that**
when the control device (50) controls the processing machine body (60) so as to form a round hole in the part,
the control device (50) controls the processing machine body (60) so as to form a first cutting line (CAr1) having a circular-arc shape on the sheet metal (W) by performing irradiation with a laser beam along a first cutting path set on a first circular arc exceeding 180 degrees from a first point (P1) to a second point (P2) on a circle indicating the round hole and continuously cutting the first cutting path,
the control device (50) controls the processing machine body (60) so as to divide an area in the circle into a plurality of scraps (Sc1-Sc7, Sc1-Sc9, Sc1-Sc22) by forming, in the circle, a plurality of dividing lines that include dividing lines with a plurality of angular positions on the first cutting line (CAr1) as start points for cutting, and
the control device (50) controls the processing machine body (60) so as to form a second cutting line (CAr2) having a circular-arc shape on the sheet metal (W) so that a final scrap (Sc8, Sc10, Sc23, Sc24) for forming the round hole is formed by performing irradiation with a laser beam along a second cutting path set on a second circular arc that is uncut and extends from the second point (P2) to the first point (P1) and cutting the second cutting path.

3. A processing program creation device comprising:
a cutting path pattern layout unit (202) configured to lay out a pattern including a plurality of cutting paths for forming a round hole in a sheet metal (W);
a cutting path setting unit (203) configured to set directions for cutting the respective cutting paths of the pattern laid out by the cutting path pattern layout unit (202) and a cutting order of the plurality of cutting paths; and
a NC data creation unit (204) configured to create NC data for controlling a laser processing machine (100) so that an NC device (50) cuts the sheet metal (W) in the pattern laid out by the cutting path pattern layout unit (202) in the directions for cutting and the cutting order set by the cutting path setting unit (203), wherein
the cutting path setting unit (203) sets, in the following order,
a first cutting path for cutting a first circular arc, exceeding 180 degrees from a first point (P1) to a second point (P2) on a circle indicating the round hole, from the first point (P1) to the second point (P2),
a plurality of second cutting paths for dividing an area in the circle into a plurality of scraps (Sc1-Sc7, Sc1-Sc9, Sc1-Sc22), the plurality of second cutting path including cutting paths with a plurality of angular positions on the first cutting path as start points for cutting; and
a third cutting path for cutting a second circular arc that is uncut and extends from the second point (P2) to the first point (P1), from the second point (P2) to the first point (P1).

## Patentansprüche

1. Laser-Bearbeitungsverfahren, das umfasst:
Durchführen von Bestrahlung mit einem Laserstrahl entlang eines ersten Schnittweges, der auf einem ersten Kreisbogen, der 180° überschreitet, von einem ersten Punkt (P1) zu einem zweiten Punkt (P2) auf einem Kreis festgelegt ist, der ein rundes Loch anzeigt, das in einem Blech (W) ausgebildet werden soll, sowie kontinuierliches Schneiden des ersten Schnittweges zum Ausbilden einer ersten Schnittlinie (CAr1) mit einer Kreisbogenform auf dem Blech (W);
Ausbilden einer Vielzahl von Trennlinien, die Trennlinien mit einer Vielzahl von Winkelpositionen auf der ersten Schnittlinie (CAr1) als Ausgangspunkte zum trennenden Schneiden eines Bereiches in dem Kreis in eine Vielzahl von Fragmenten (Sc1-Sc7, Sc1-Sc9, Sc1-Sc22) einschließen; sowie
Durchführen von Bestrahlung mit einem Laserstrahl entlang eines zweiten Schnittweges, der auf einem zweiten Kreisbogen, festgelegt ist, der nicht geschnitten ist und sich von dem zweiten Punkt (P2) zu dem ersten Punkt (P1) erstreckt, sowie Schneiden des zweiten Schnittweges zum Ausbilden einer zweiten Schnittlinie (Car2) mit einer Kreisbogenform auf dem Blech (W), um ein abschließendes Fragment (Sc8, Sc10, Sc23, Sc24) auszubilden, mit dem das runde Loch ausgebildet wird.

2. Laser-Bearbeitungsmaschine (100), die umfasst:
einen Bearbeitungsmaschinen-Körper (60), der einen Tisch (12) enthält, auf dem eine Vielzahl von Schlitten (13) angeordnet sind, wobei der Bearbeitungsmaschinen-Körper (60) zum Bestrahlen eines an den Schlitten (13) montierten Blechs (W) mit einem Laserstrahl sowie zum Schneiden des Blechs (W) ausgeführt ist; und
eine Steuerungsvorrichtung (50), die so ausgeführt ist, dass sie den Bearbeitungsmaschinen-Körper (60) so steuert, dass der Bearbeitungsmaschinen-Körper (60) das Blech (W) zum Herstellen eines Teils schneidet,
**dadurch gekennzeichnet, dass**
wenn die Steuerungsvorrichtung (50) den Bearbeitungsmaschinen-Körper (60) zum Ausbilden eines runden Lochs in dem Teil steuert,
die Steuerungsvorrichtung (50) den Bearbeitungsmaschinen-Körper (60) zum Ausbilden einer ersten Schnittlinie (Car1) mit einer Kreisbogenform auf dem Blech (W) steuert, indem Bestrahlung mit einem Laserstrahl entlang eines ersten Schnittweges durchgeführt wird, der auf einem ersten Kreisbogen, der 180° überschreitet, von einem ersten Punkt (P1) zu einem zweiten Punkt (P2) auf einem Kreis festgelegt ist, der das runde Loch anzeigt, und der erste Schnittweg kontinuierlich geschnitten wird,
die Steuerungsvorrichtung (50) den Bearbeitungsmaschinen-Körper (60) so steuert, dass ein Bereich in dem Kreis in eine Vielzahl von Fragmenten (Sc1-Sc7, Sc1-Sc9, Sc1-Sc22) getrennt wird, indem in dem Kreis eine Vielzahl von Trennlinien ausgebildet werden, die Trennlinien mit einer Vielzahl von Winkelpositionen auf der ersten Schnittlinie (CAr1) als Ausgangspunkte zum Schneiden einschließen, und
die Steuerungsvorrichtung (50) den Bearbeitungsmaschinen-Körper (60) zum Ausbilden einer zweiten Schnittlinie (Car2) mit einer Kreisbogenform auf dem Blech (W) so steuert, dass ein abschließendes Fragment (Sc8, Sc10, Sc23, Sc24) zum Ausbilden des runden Lochs ausgebildet wird, indem Bestrahlung mit einem Laserstrahl entlang eines zweiten Schnittweges durchgeführt wird, der auf einem zweiten Kreisbogen festgelegt ist, der nicht geschnitten ist und sich von dem zweiten Punkt (P2) zu dem ersten Punkt (P1) erstreckt, und der zweite Schnittweg geschnitten wird.

3. Vorrichtung zum Erstellen eines Bearbeitungsprogramms, die umfasst:
eine Einheit (202) zum Ausführen eines Schnittweg-Musters, die zum Ausführen eines Musters ausgeführt ist, das eine Vielzahl von Schnittwegen zum Ausbilden eines runden Lochs in einem Blech (W) einschließt;
eine Einheit (203) zum Festlegen von Schnittwegen, die so ausgeführt ist, dass sie Richtungen zum Schneiden der jeweiligen Schnittwege des durch die Einheit (202) zum Ausführen eines Schnittweg-Musters ausgeführten Musters sowie eine Schnitt-Reihenfolge der Vielzahl von Schnittwegen festlegt; und
eine Einheit (204) für Erstellung von NC-Daten, die so ausgeführt ist, dass sie NC-Daten erstellt, mit denen eine Laser-Bearbeitungsmaschine (100) so gesteuert wird, dass eine NC-Vorrichtung (50) das Blech (W) in dem durch die Einheit (202) zum Ausführen eines Schnittweg-Musters ausgeführten Muster in den Richtungen zum Schneiden sowie der Schnitt-Reihenfolge schneidet, die durch die Einheit (203) zum Festlegen von Schnittwegen festgelegt werden, wobei
die Einheit (203) zum Festlegen von Schnittwegen der Reihe nach festlegt:
einen ersten Schnittweg zum Schneiden eines ersten Kreisbogens, der 180° überschreitet, von einem ersten Punkt (P1) zu einem zweiten Punkt (P2) auf einem Kreis, der ein rundes Loch anzeigt, von dem ersten Punkt (P1) zu dem zweiten Punkt (P2),
eine Vielzahl zweiter Schnittwege zum Trennen eines Bereiches in dem Kreis in eine Vielzahl von Fragmenten (Sc1-Sc7, Sc1-Sc9, Sc1-Sc22), wobei die Vielzahl zweiter Schnittwege Schnittwege mit einer Vielzahl von Winkelpositionen auf dem ersten Schnittweg als Ausgangspunkte zum Schneiden einschließen; sowie
einen dritten Schnittweg zum Schneiden eines zweiten Kreisbogens, der nicht geschnitten ist und sich von dem zweiten Punkt (P2) zu dem ersten Punkt (P1) erstreckt, von dem zweiten Punkt (P2) zu dem ersten Punkt (P1).

## Revendications

1. Procédé de traitement au laser comprenant :
la réalisation d'une irradiation avec un faisceau laser le long d'un premier trajet de découpe défini sur un premier arc circulaire dépassant 180 degrés d'un premier point (P1) à un deuxième point (P2) sur un cercle indiquant un trou rond à former dans une tôle (W), et la découpe continue du premier trajet de découpe pour former une première ligne de découpe (CAr1) ayant une forme d'arc circulaire sur la tôle (W) ;
la formation, dans le cercle, d'une pluralité de lignes de division qui comprennent des lignes de division avec une pluralité de positions angulaires sur la première ligne de découpe (CAr1) comme points de départ de la découpe pour diviser une zone dans le cercle en une pluralité de chutes (Sc1-Sc7, Sc1-Sc9, Sc1-Sc22) ; et
la réalisation d'une irradiation avec un faisceau laser le long d'un deuxième trajet de découpe défini sur un deuxième arc circulaire qui n'est pas découpé et s'étend du deuxième point (P2) au premier point (P1), et la découpe du deuxième trajet de découpe pour former une deuxième ligne de découpe (CAr2) ayant une forme d'arc circulaire sur la tôle (W) de manière à former une chute finale (Sc8, Sc10, Sc23, Sc24) pour la formation du trou rond.

2. Machine de traitement au laser (100) comprenant :
un corps de machine de traitement (60) comprenant une table (12) sur laquelle est agencée une pluralité de patins (13), le corps de machine de traitement (60) étant configuré pour irradier une tôle (W) montée sur les patins (13) avec un faisceau laser et découper la tôle (W) ; et
un dispositif de commande (50) configuré pour commander le corps de machine de traitement (60) de sorte le corps de machine de traitement (60) découpe la tôle (W) pour produire une pièce,
**caractérisée en ce que**
lorsque le dispositif de commande (50) commande le corps de machine de traitement (60) de manière à former un trou rond dans la pièce,
le dispositif de commande (50) commande le corps de machine de traitement (60) de manière à former une première ligne de découpe (CAr1) ayant une forme d'arc circulaire sur la tôle (W) par réalisation d'une irradiation avec un faisceau laser le long d'un premier trajet de découpe défini sur un premier arc circulaire dépassant 180 degrés d'un premier point (P1) à un deuxième point (P2) sur un cercle indiquant le trou rond et découpe continue du premier trajet de découpe,
le dispositif de commande (50) commande le corps de machine de traitement (60) de manière à diviser une zone dans le cercle en une pluralité de chutes (Sc1-Sc7, Sc1-Sc9, Sc1-Sc22) en formant, dans le cercle, une pluralité de lignes de division qui comprennent des lignes de division avec une pluralité de positions angulaires sur la première ligne de découpe (CAr1) servant de points de départ pour la découpe, et
le dispositif de commande (50) commande le corps de machine de traitement (60) de manière à former une deuxième ligne de découpe (CAr2) ayant une forme d'arc circulaire sur la tôle (W) de sorte qu'une chute finale (Sc8, Sc10, Sc23, Sc24) pour la formation du trou rond soit formée par réalisation d'une irradiation avec un faisceau laser le long d'un deuxième trajet de découpe défini sur un deuxième arc circulaire qui n'est pas découpé et s'étend du deuxième point (P2) au premier point (P1) et découpe du deuxième trajet de découpe.

3. Dispositif de création de programme de traitement comprenant :
une unité de tracé de motif de trajet de découpe (202) configurée pour tracer un motif comprenant une pluralité de trajets de découpe pour former un trou rond dans une tôle (W) ;
une unité de définition de trajet de découpe (203) configurée pour définir des directions de découpe des trajets de découpe respectifs du motif tracé par l'unité de tracé de motif de trajet de découpe (202) et un ordre de découpe de la pluralité de trajets de découpe ; et
une unité de création de données CN (204) configurée pour créer des données CN afin de commander une machine de traitement au laser (100) de sorte qu'un dispositif CN (50) découpe la tôle (W) selon le motif tracé par l'unité de tracé de motif de trajet de découpe (202) dans les directions de découpe et l'ordre de découpe définis par l'unité de définition de trajet de découpe (203), dans lequel
l'unité de définition de trajet de découpe (203) définit, dans l'ordre suivant :
un première trajet de découpe pour découper un premier arc circulaire, dépassant 180 degrés d'un premier point (P1) à un deuxième point (P2) sur un cercle indiquant le trou rond, du premier point (P1) au deuxième point (P2) ;
une pluralité de deuxièmes trajets de découpe pour diviser une zone dans le cercle en une pluralité de chutes (Sc1-Sc7, Sc1-Sc9, Sc1-Sc22), la pluralité de deuxièmes trajets de découpe comprenant des trajets de découpe avec une pluralité de positions angulaires sur le premier trajet de découpe comme points de départ de la découpe ; et
un troisième trajet de découpe pour la découpe d'un deuxième arc circulaire qui n'est pas découpé et s'étend du deuxième point (P2) au premier point (P1), du deuxième point (P2) au premier point (P1).
